# EUROPÄISCHE PATENTSCHRIFT

(11) **EP 2 383 566 B1**
(45) Veröffentlichungstag und Bekanntmachung des Hinweises auf die Patenterteilung: **23.10.2013**
(21) Anmeldenummer: 10004488.2
(22) Anmeldetag: 28.04.2010
(51) Int. Cl.: G01N 21/89, G01N 21/952

(54) **System und Verfahren zur Prüfung von Seilen**
Method and system for testing ropes
Procédé et système pour tester des câbles

(43) Veröffentlichungstag der Anmeldung: 02.11.2011
(73) Patentinhaber: Winspect GmbH, 80992 München (DE)
(72) Erfinder: Winter, Sven, 71576 Burgstall (DE); Moll, Dirk, 73265 Dettingen unter Teck (DE); Eisinger, Ralf, 89075 Ulm (DE); Kühner, Konstantin, 70180 Stuttgart (DE); Guttengeber, Egon, 86573 Obergriessbach (DE); Eichinger, Markus, 82299 Türkenfeld (DE); Pröhl, Andreas, 80636 München (DE)
(74) Vertreter: Müller-Boré & Partner Patentanwälte

(56) Entgegenhaltungen:
- WO-A1-2010/092619
- JP-A- 2 056 397
- JP-A- 3 060 312

## Beschreibung

Die vorliegende Erfindung betrifft ein System und ein Verfahren zur Prüfung von Seilen sowie ein Computerprogrammprodukt.

Je nach Einsatzgebiet sind Seile unterschiedlichen Belastungen ausgesetzt. Beispielsweise laufen Seile im Betrieb bei Seilbahnen, Krananlagen oder Aufzügen über Rollen bzw. sie werden durch Scheiben umgelenkt. Dabei wird das Seil mit den Einzeldrähten primär mit Zugspannungen und sekundär mit Biege- sowie Torsionsspannungen beansprucht. Insbesondere laufende und stehende Seile haben aus diesem Grund eine endliche Lebensdauer.

Um die Betriebssicherheit der Seile, insbesondere bei Seilen von Seilbahnen, Brücken, Krananlagen oder Aufzügen, zu gewährleisten, sind regelmäßige Kontrollen der Seile notwendig. Diese Kontrollen können gemäß dem Stand der Technik eine visuelle Seilkontrolle durch einen Mitarbeiter umfassen.

Die Druckschrift WO 2010/092619 A1 offenbart ein Seilprüfgerät, welches zumindest eine Kamera aufweist, um das Seil optisch zu erfassen. Eine Bildauswerteeinheit bestimmt dann anhand der erfaßten optischen Daten des Seils, ob das Seil Fehlerstellen aufweist.

Die Druckschrift JP 3060312 A offenbart ein System zur Prüfung von Hochspannungsüberlandleitungen, welche mittels einer in einem Hubschrauber angeordneten Videokamera erfaßt werden. Die von der Kamera aufgezeichneten Bilder werden rechnergestützt hinsichtlich ihrer Schwärzung ausgewertet, wobei Abweichungen bezüglich der Schwärzung der erfaßten Bilder die Grundlage für die Beurteilung bilden, ob eine Fehlerstelle der Hochspannungsüberlandleitung vorliegt.

Die Druckschrift JP 2056397 A offenbart eine Seilprüfvorrichtung zum Prüfen des Seiles eines Krans, wobei die Seilprüfvorrichtung Fernsehkameras aufweist, welche das Seil während des Betriebs überwachen. Die erfaßten Bilder werden durch eine Bildverarbeitungseinrichtung verarbeitet, um beispielsweise den Durchmesser des Seils zu bestimmen und Defekte an dem Seil zu detektieren.

Ausgehend von dem bekannten Stand der Technik ist es eine Aufgabe der Erfindung, ein Verfahren, ein Computerprogrammprodukt bzw. ein System zum Prüfen eines Seils bereitzustellen, welches einfacher und sicherer durchzuführen ist und welches ein verbessertes Prüfergebnis erzielt.

Die Aufgabe wird durch ein Verfahren zur Prüfung von Seilen mit den Merkmalen des Anspruchs 1, durch ein Computerprogrammprodukt mit den Merkmalen des Anspruchs 11 und ein System mit den Merkmalen des Anspruchs 12 gelöst. Bevorzugte Ausführungsformen sind Gegenstand der abhängigen Ansprüche.

### Verfahren zum Prüfen

Ein Aspekt der vorliegenden Erfindung betrifft ein Verfahren zum computergestützten, optischen Prüfen eines Seils umfassend:
- Bereitstellen eines Bilddatensatzes zu zumindest einem Abschnitt des Seils;
- Bereitstellen von Sollwerten einer bildlichen Längserstreckung J₀ der Darstellung von Drähten relativ zu einer bildlichen Längserstreckung L des Seils in dem Bilddatensatz;
- Bestimmen einer bildlichen Längserstreckung Jₘ der Drähte in dem Bilddatensatz, wobei das Bestimmen ein Anpassen einer angenommenen Längserstreckung an den Bilddatensatz umfaßt;
- Bestimmen zumindest eines Gütewertes mittels einer Gütenorm als Funktion der bestimmten bildlichen Längserstreckung Jₘ der Drähte und der Sollwerte der bildlichen Längserstreckung J₀ der Drähte;
- Diskriminieren von bildlichen Positionen innerhalb des Bilddatensatzes des Seils, an denen zumindest ein Gütewert einen vorbestimmten zugeordneten Gütegrenzwert überschreitet oder unterschreitet;
- Bereitstellen der diskriminierten bildlichen Positionen.

Eine optische Seilkontrolle ist anhand des bereitgestellten Bilddatensatzes möglich, wobei vorteilhafterweise eine hohe körperliche Belastung des eine visuelle Kontrolle durchführenden Mitarbeiters, beispielsweise durch räumlich beengte Arbeitsplätze, durch körperliche Zwangshaltungen und mangelhafte Sitzpositionen, unzureichende Beleuchtungsverhältnisse und Witterungseinflüsse (Kälte, Regen, Wind, usw.) vermieden wird. Insbesondere bei langer Prüfzeit kann vorteilhafterweise eine Beeinträchtigung des Kontrollergebnisses aufgrund eines Konzentrationsabfalls des die Kontrolle durchführenden Mitarbeiters vermieden werden. Das erfindungsgemäße Verfahren kann vorteilhafterweise jederzeit unterbrochen werden und/oder unbeaufsichtigt durchgeführt werden.

Das Bereitstellen des Bilddatensatzes kann bevorzugt ein optisches Erfassen zumindest eines Abschnittes des Seils umfassen, insbesondere mittels einer optischen Seilerfassungseinrichtung, so daß das optische Erfassen vorteilhafterweise im laufenden Betrieb möglich ist. Weiter vorteilhafterweise wird durch das optische Erfassen eine Gefährdung des durchführenden Mitarbeiters beispielsweise durch sich bewegende Teile wie Seil, Seilscheibe, Rollen, etc ausgeschlossen.

Vorteilhafterweise liegt der bereitgestellte bzw. erfaßte Bilddatensatz in elektronischer Form vor und ist daher mittels einer entsprechenden Archiviereinrichtung dauerhaft archivierbar. Dadurch sind Änderungen des Seilszustandes vorteilhafterweise leicht zu erkennen bzw. nachzuvollziehen. Neben der Archivierbarkeit des visuelle Seilzustand ist der Zustand besser objektiv nachvollziehbar bzw. nachprüfbar. Zur besseren Archivierbarkeit des Bilddatensatzes können die erfaßten bzw. bereitgestellten Bilder bzw. Rohbilddaten vorzugsweise mit geeigneten Algorithmen komprimiert abgespeichert werden. Das Komprimierungs-Verfahren kann vorzugsweise so gewählt werden, daß ein wahlfreier Zugriff auf eine beliebige Seilposition möglich ist, beispielsweise durch eine abschnittsweise JPEG-Komprimierung zusammen mit einer Jump-Tabelle in der die Seilpositionen indiziert ist. Diese Komprimierung kann vorzugsweise schon während des Erfassens der Bilddaten stattfinden, so daß eine vorbestimmte beschränkte Datentransferrate auf das Speichermedium nicht überschritten wird.

Weiter vorteilhafterweise ermöglicht die Archivierbarkeit des Bilddatensatzes auch die Verlaufskontrolle des Seilzustandes über die Zeit. So ist denkbar, daß durch Zuordnung gleicher Seilpositionen von zu unterschiedlichen Zeiten aufgenommen Bilddaten eine zeitliche Entwicklung des Seilzustandes oder eines Fehlstelle beobachtet werden kann.

Weiter vorteilhafterweise kann das Prüfverfahren auch als sogenannte "InlineKontrolle" angewendet werden, wenn die Berechnungsdauer der auszuwertenden Observablen, die Rechnerleistung und die Inlinekontrolle dies zuläßt. Die Seilparameter, Sollwerte und Grenzwerte können dabei in einem vorgelagerten Konfigurationsprozess festgelegt werden.

Das Prüfverfahren kann bevorzugt eine 3D-Rekonstruktion umfassen. Da die Seilgeometrie in der Regel gut bekannt ist, kann aus den ermittelten Abweichungen der Drahtpositionen in einem 2D-Bild des Bilddatensatzes auf eine Abweichung der Seilgeometrie im dreidimensionalen Raum geschlossen werden. Diese 3D-Seilgeometrie könnte dann zur genaueren Visualisierung im dreidimensionalen Raum rekonstruiert und als Modell auf einer Anzeigeeinrichtung bzw. einem Display dargestellt werden. Die 2D-Bilddaten des Bilddatensatzes können insbesondere nach einer entsprechenden Transformation als Textur für dieses 3D-Modell verwendet werden.

Unter der bildlichen Längserstreckung Jₘ, J₀, J der Darstellung von Drähten im Sinne der Erfindung wird verstanden, daß sich ein in dem Bilddatensatz enthaltenes Abbild eines Drahtes im wesentlichen entlang einer bevorzugten Raumrichtung erstreckt, welche als Längserstreckung bzw. Längsrichtung des Drahtes bezeichnet werden. Drähte eines Seils erstrecken sich räumlich bevorzugt entlang ihrer Längserstreckung, insbesondere über mehrere Meter Länge, während die Breitenerstreckung von Drähten etwa 0,5 mm bis etwa 6 mm beträgt. Der Bilddatensatz wird derart bereitgestellt, daß er eine Abbildung von Drähten eines Seils bzw. des Seils umfaßt, bei welcher die Längserstreckung von Drähten des Seils bzw. die Längsrichtung bzw. Längserstreckung L des Seils im wesentlichen mit einer die Bildebene aufspannenden Richtung zusammenfällt. Das Abbild der Drähte bzw. des Seils in dem derart bereitgestellten Bilddatensatz weist somit ebenfalls eine Längserstreckung auf, die beispielsweise um einen Faktor größer als etwa 2, bevorzugt größer als etwa 5, insbesondere größer als etwa 10, länger ist als die Breitenerstreckung des Abbildes des Drahtes bzw. des Seils in dem Bilddatensatz.

Der Begriff "Draht" im Sinne der Erfindung ist nicht auf einen Metalldraht beschränkt, sondern umfaßt auch Kunststoffasern, welche zur Ausbildung eines Kunststoffseiles verwendet werden, oder Naturfasern. Der Begriff "Draht" im Sinne der Erfindung ist dementsprechend als "Draht bzw. Faser, insbesondere Kunststoffaser oder Naturfaser" zu lesen. Der Begriff "Seit" umfaßt daher neben Drahtseilen auch Kunststoffseile, Faserseile und so weiter.

Das Bereitstellen von Sollwerten der bildlichen Längserstreckung J₀ der Darstellung von Drähten kann mittels einer Datenbank, durch Auslesen eines Datenträgers bzw. mittels einer Benutzereingabe erfolgen. Die Sollwerte der bildlichen Längserstreckung J₀ können Sollpunkte, Sollpositionen und/oder Sollrichtungen des Abbilds von Drähten relativ zu der bildlichen Längserstreckung L des Seils in dem Bilddatensatz umfassen. Vorteilhafterweise ermöglicht die Bezugnahme der Sollwerte auf die bildliche Längserstreckung L des Seils eine genaue Definition von Sollpunkten, Sollpositionen und/oder Sollrichtungen auch für den Fall, daß die Längserstreckung L des Seils in dem Bilddatensatz nicht eine vorbestimmte Richtung und/oder Position aufweist.

Insbesondere können die Sollwerte der bildlichen Längserstreckung J₀ der Darstellung von Drähten einen Drahtwinkel β von einem oder mehreren Drähten umfassen, wobei der Drahtwinkel β als der Winkel definiert sein kann, welcher zwischen dem Sollwert der bildlichen Längserstreckung L₀ des Seils und dem Sollwert der Längserstreckung J₀ der Drähte eingeschlossen ist. Da für die Sollwerte ein fehlerfreies Seil unterstellt werden kann, können die Drahtwinkel β für alle Drähte durch die Art des Seil vorbestimmt sein. Beispielsweise können die Drahtwinkel benachbarter Drähte im wesentlichen gleich groß sein, das heißt, daß benachbarte Drähte im wesentlichen parallel zueinander angeordnet und in dem Bilddatensatz im wesentlichen parallel zueinander abgebildet sind.

Bevorzugt können die Sollwerte der bildlichen Längserstreckung J₀ der Darstellung von Drähten auch eine erwartete Sollanfangs- und/oder Sollendposition von einem oder mehreren Drähten umfassen. Die Sollanfangs- bzw. Sollendposition kann den Anfang bzw. das Ende der in dem Bilddatensatz sichtbaren Längserstreckung J₀ der Drähte definieren. Alternativ oder zusätzlich können die Sollwerte auch weitere Sollpositionen eines oder mehrerer Drähte des Seil umfassen, wie beispielsweise einen geometrischen Mittelpunkt oder einen Wendepunkt der in dem Bilddatensatz sichtbaren Längserstreckung der Drähte.

Vorzugsweise erfolgt der Schritt des Bestimmens der räumlichen Erstreckung der Drähte in dem erfaßten Abschnitt des Seils durch Anpassen einer angenommenen Längserstreckung der Drähte an Bereiche des Bilddatensatzes mit hohen Helligkeitswerten. Ein hoher Helligkeitswert ist beispielsweise ein Helligkeitswert, der über dem Mittelwert aller das Seil betreffenden Helligkeitswerte des Bilddatensatzes liegt.

Das Bestimmen der tatsächlichen bildlichen Längserstreckung Jₘ der Drähte in dem Bilddatensatz wird durch Anpassen bzw. Fitten ermittelt, insbesondere durch ein iteratives Anpassen bzw. Fitten. Zum Anpassen können die Sollwerte der bildlichen Längserstreckung J₀ von Drähten als initiale Startwerte für eine angenommene Längserstreckung angenommen werden. Das Anpassen umfaßt das Bestimmen von an Position der angenommene Längserstreckung vorhandenen Bildinformationen des Bilddatensatzes und das Verändern der angenommene Längserstreckung, um eine Abweichung zwischen den an der angenommene Längserstreckung vorhandenen Bildinformationen und erwarteten Bildinformationen zu minimieren. Beispielsweise können die Sollwerte der bildlichen Längserstreckung J₀ der Darstellung eines Drahtes die Drahtmittellinie betreffen, so daß an den Stellen des Bilddatensatzes, an denen sich die Drahtmittellinie befindet, beispielsweise höhere Helligkeitswerte zu erwarten sind, als an der Grenzlinien zwischen zwei benachbarten Drähten. Ausgehend von der bildlichen Längserstreckung J₀ gemäß der Sollwerte kann durch das Anpassen der angenommene Längserstreckung mittels des Bilddatensatz die tatsächliche Längserstreckung Jₘ bestimmt werden.

Gemäß dem Verfahren wird auf Grundlage und der bereitgestellten Sollwerte der bildlichen Längserstreckung J₀ der Drähte und der mittels des Anpassens bestimmten bildlichen Längserstreckung Jₘ der Drähte zumindest ein Gütewert berechnet, welcher angibt, inwieweit die tatsächliche Längserstreckung Jₘ von dem Sollwert der bildlichen Längserstreckung J₀ abweicht. Daher kann das Bestimmen des Gütewertes ein Vergleichen der bestimmten bildlichen Längserstreckung der Drähte mit den Sollwerten der bildlichen Längserstreckung der Drähte umfassen. Der Gütewert kann mittels einer Gütenorm als Funktion dieses Vergleichs, d.h. als Funktion der bestimmten bildlichen Längserstreckung Jₘ der Drähte und der Sollwerte der bildlichen Längserstreckung J₀ der Drähte ermittelt werden. Als Gütenorm können verschiedene Abstandsnormen, Konfidenzwerte oder statistische Kennzahlen verwendet werden.

Auf Grundlage des zumindest einen bestimmten Gütewertes erfolgt ein Diskriminieren von bildlichen Positionen innerhalb des Bilddatensatzes des Seils, an denen zumindest ein Gütewert einen vorbestimmten zugeordneten Gütegrenzwert überschreitet oder unterschreitet. Dem Über- bzw. Unterschreiten eines Gütegrenzwertes kann ein potentieller Seilfehler zugeordnet sein, so daß das Diskriminieren auch ein Diskriminieren bezüglich des Vorliegens eines Seilfehlers bzw. eines bestimmten Seilfehlers umfassen kann.

Das Ergebnis des Diskriminierens wird bereitgestellt, wobei neben der Angabe, daß ein Gütegrenzwert innerhalb des Bilddatensatzes über- bzw. unterschritten wird, auch die der Über- bzw. Unterschreitung zuordenbare bzw. zugeordnete bildliche Position bereitgestellt werden kann. Weiter kann die bildliche Position innerhalb des Bilddatensatzes mit einer räumlichen Position verknüpft sein, so daß alternativ oder zusätzlich die räumlichen Positionen bereitgestellt werden können, an denen ein Über- bzw. Unterschreiten des Gütegrenzwertes auftritt. Es versteht sich, daß für den Fall, daß bezüglich zwei oder mehr Gütegrenzwerte diskriminiert wurde, auch die Information bereitgestellt werden kann, welcher der Gütegrenzwerte nicht eingehalten wurde und insbesondere welcher der den Gütegrenzwerte zugeordneten Seilfehler aufgetreten ist. Das Bereitstellen des Ergebnisses kann dabei insbesondere ein Abspeichern auf einen Datenträger, ein Anzeigen auf einer Anzeigeeinrichtung, ein Ausdrucken eines Prüfprotokolls und eine Übermittlung an eine externe Einrichtung, beispielsweise über eine Schnittstelle in Form eines Datenstroms umfassen.

Vorzugsweise umfaßt das Verfahren weiter die Schritte:
- Bereitstellen von Sollwerten der bildlichen Längserstreckung K₀ der Darstellung von Litzen relativ zu der bildlichen Längserstreckung des Seils in dem Bilddatensatz;
- Bestimmen der bildlichen Längserstreckung Kₘ der Litzen in dem Bilddatensatz, wobei das Bestimmen ein Anpassen einer angenommenen Längserstreckung an den Bilddatensatz umfaßt;
- Bestimmen zumindest eines Schlaggütewertes mittels einer Schlaggütenorm als Funktion der bestimmten bildlichen Längserstreckung der Litzen und der Sollwerte der bildlichen Längserstreckung der Litzen.

Bevorzugte zu prüfende Objekte sind Litzenseile, insbesondere Litzendrahtseile, deren Litzen spiralförmig um eine Seileinlage herum angeordnet sind. Die Litzen wiederum umfassen eine Litzeneinlage, um welche eine Mehrzahl von Drähten spiralförmig angeordnet sind.

Unter der bildlichen Längserstreckung der Darstellung von Litzen im Sinne der Erfindung wird verstanden, daß sich ein in dem Bilddatensatz enthaltenes Abbild einer Litze im wesentlichen entlang einer bevorzugten Raumrichtung erstreckt, welche als Längserstreckung bzw. Längsrichtung der Litze bezeichnet werden. Ebenso wie die Drähte eines Seils erstrecken sich Litzen räumlich bevorzugt entlang ihrer Längserstreckung, insbesondere über mehrere Meter Länge, während die Breitenerstreckung von Litzen etwa 1 mm bis etwa 30 mm beträgt. Wird der Bilddatensatz wie oben beschrieben bereitgestellt, so fällt die Längserstreckung einer der spiralförmige angeordneten Litzen zumindest bereichsweise im wesentlichen mit einer die Bildebene aufspannenden Richtung zusammen.

Das Bereitstellen von Sollwerten der bildlichen Längserstreckung K₀ der Darstellung von Litzen kann mittels einer Datenbank, durch Auslesen eines Datenträgers bzw. mittels einer Benutzereingabe erfolgen. Die Sollwerte der bildlichen Längserstreckung K₀ können Sollpunkte, Sollpositionen und/oder Sollrichtungen des Abbilds von Litzen relativ zu der bildlichen Längserstreckung L des Seils in dem Bilddatensatz umfassen. Vorteilhafterweise ermöglicht die Bezugnahme der Sollwerte auf die bildliche Längserstreckung L des Seils eine genaue Definition von Sollpunkten, Sollpositionen und/oder Sollrichtungen auch für den Fall, daß die Längserstreckung L des Seils in dem Bilddatensatz nicht eine vorbestimmte Richtung und/oder Position aufweist.

Insbesondere können die Sollwerte der bildlichen Längserstreckung K₀ der Darstellung von Litzen einen Schlagwinkel α von einem oder mehreren Litzen umfassen, wobei der Schlagwinkel α als der Winkel definiert sein kann, welcher zwischen dem Sollwert der bildlichen Längserstreckung L₀ des Seils und dem Sollwert der Längserstreckung K₀ der Litzen eingeschlossen ist. Da für die Sollwerte ein fehlerfreies Seil unterstellt werden kann, können die Schlagwinkel α für alle Litzen durch die Art des Seil vorbestimmt sein. Beispielsweise können die Schlagwinkel benachbarter Litzen im wesentlichen gleich groß sein, das heißt, daß benachbarte Litzen im wesentlichen parallel zueinander angeordnet und in dem Bilddatensatz im wesentlichen parallel zueinander abgebildet sind. Alternativ oder zusätzlich zu dem Schlagwinkel α kann auch eine Schlaglänge S einer oder mehrerer Litzen als Sollwert(e) bereitgestellt werden. Die Schlaglänge S gibt an, nach welchem Abstand entlang der Längsrichtung L des Seils eine Litze eine vollständig Umwicklung der Seileinlage vollführt hat. Die Schlaglänge S ist auch mittels der Litzendicke und der Anzahl der Litzen durch Multiplikation der beiden Größen bestimmbar.

Bevorzugt können die Sollwerte der bildlichen Längserstreckung K₀ der Darstellung von Litzen auch eine erwartete Soll anfangs- und/oder Sollendposition von einem oder mehreren Litzen oder von einer oder mehreren Grenzlinien zwischen benachbarten Litzen umfassen. Die Sollanfangs- bzw. Sollendposition kann den Anfang bzw. das Ende der in dem Bilddatensatz sichtbaren Längserstreckung K₀ der Litzen definieren. Alternativ oder zusätzlich können die Sollwerte auch weitere Sollpositionen eines oder mehrerer Litzen des Seil umfassen, wie beispielsweise einen geometrischen Mittelpunkt, einen Wendepunkt der in dem Bilddatensatz sichtbaren Längserstreckung der Litzen, oder Punkte auf der Grenzlinie einer der Litzen zu einer benachbarten Litze.

Vorzugsweise erfolgt der Schritt des Bestimmens der räumlichen Erstreckung der Litzen in dem erfaßten Abschnitt des Seils durch Anpassen der angenommenen Längserstreckung Kₘ der Litzen an Bereiche des Bilddatensatzes mit geringer Helligkeitswerten. Ein geringer Helligkeitswert ist beispielsweise ein Helligkeitswert, der unter dem Mittelwert aller das Seil betreffenden Helligkeitswerte des Bilddatensatzes liegt.

Das Bestimmen der tatsächlichen bildlichen Längserstreckung Kₘ der Litzen in dem Bilddatensatz wird durch Anpassen bzw. Fitten ermittelt, insbesondere durch ein iteratives Anpassen bzw. Fitten. Zum Anpassen können die Sollwerte der bildlichen Längserstreckung K₀ von Litzen als initiale Startwerte für eine angenommene Längserstreckung angenommen werden. Das Anpassen umfaßt das Bestimmen von an Position der angenommene Längserstreckung vorhandenen Bildinformationen des Bilddatensatzes und das Verändern der angenommene Längserstreckung, um eine Abweichung zwischen den an der angenommene Längserstreckung vorhandenen Bildinformationen und erwarteten Bildinformationen zu minimieren. Beispielsweise können die Sollwerte der bildlichen Längserstreckung K₀ der Darstellung einer Litze die Grenzlinie dieser Litze zu einer benachbarten Litze betreffen, so daß an den Stellen des Bilddatensatzes, an denen sich die Grenzlinie der Litze befindet, aufgrund eines Schattenwurfes niedrigere Helligkeitswerte zu erwarten sind, als an den die Grenzlinie umgebenen Stellen. Ausgehend von der bildlichen Längserstreckung K₀ gemäß der Sollwerte kann durch das Anpassen der angenommene Längserstreckung mittels des Bilddatensatz die tatsächliche Längserstreckung Kₘ bestimmt werden.

Gemäß dem Verfahren kann auf Grundlage der bereitgestellten Sollwerte der bildlichen Längserstreckung K₀ der Litzen und der mittels des Anpassens bestimmten bildlichen Längserstreckung Kₘ der Litzen der Schlaggütewert Gₛ berechnet werden. Der Schlaggütewert Gₛ gibt an inwieweit die tatsächliche Längserstreckung Kₘ von dem Sollwert der bildlichen Längserstreckung K₀ abweicht, beispielsweise durch eine Variation der Schlaglänge S oder des Schlagwinkels α. Das Bestimmen des Schlaggütewertes Gₛ kann ein Vergleichen der bestimmten bildlichen Längserstreckung der Litzen mit den Sollwerten der bildlichen Längserstreckung der Litzen umfassen. Der Schlaggütewert Gₛ kann mittels der Schlaggütenorm als Funktion dieses Vergleichs, d.h. als Funktion der bestimmten bildlichen Längserstreckung Kₘ der Litzen und der Sollwerte der bildlichen Längserstreckung K₀ der Litzen ermittelt werden. Als Schlaggütenorm können verschiedene Abstandsnormen, Konfidenzwerte oder statistische Kennzahlen verwendet werden.

Vorzugsweise erfolgt das Bereitstellen von Sollwerten der bildlichen Längserstreckung J₀ der Darstellung von Drähten relativ zu der bildlichen Längserstreckung der Litzen in dem Bilddatensatz. Weiter bevorzugt erfolgt das Bestimmen der bildlichen Längserstreckung Jₘ der Drähte in dem Bilddatensatz relativ zu der bestimmten Längserstreckung der Litzen.

Wie bereits ausgeführt können die bereitgestellten Sollwerte der bildlichen Längserstreckung J₀ der Darstellung von Drähten, beispielsweise Sollpunkte, Sollpositionen und/oder Sollrichtungen des Abbilds von Drähten, relativ zu der bildlichen Längserstreckung L des Seils in dem Bilddatensatz angegeben sein. Für den bevorzugten Fall der Prüfung eines Litzenseils können diese Sollwerte der Längserstreckung J₀ alternativ oder zusätzlich relativ zu einem Sollwert der Längserstreckung K₀ einer oder mehrerer Litzen angegeben werden. Vorteilhafterweise ermöglicht die Bezugnahme der Sollwerte auf die bildliche Längserstreckung K₀ der Litze eine genaue Definition von Sollpunkten, Sollpositionen und/oder Sollrichtungen auch für den Fall, daß die tatsächliche Längserstreckung Kₘ der Litze relativ zur Längserstreckung L des Seils in dem Bilddatensatz nicht eine vorbestimmte Richtung und/oder Position aufweist. Vorteilhafterweise können dadurch insbesondere Fälle unterschieden werden, bei welchen sich eine Litze als ganzes nicht in der Sollposition befindet, aber die Längserstreckungen der Drähte innerhalb der Litze ihren Sollpositionen entspricht, von solchen Fällen, bei welchen zusätzlich Abweichungen in der Längserstreckung der Drähte im Hinblick auf die Sollwerte auftritt.

Insbesondere können die Sollwerte der bildlichen Längserstreckung J₀ der Darstellung von Drähten einen Draht-Litzen-Winkel γ von einem oder mehreren Drähten umfassen, wobei der Draht-Litzen-Winkel γ als der Winkel definiert sein kann, welcher zwischen dem Sollwert der bildlichen Längserstreckung K₀ der Litze und dem Sollwert der Längserstreckung J₀ der Drähte eingeschlossen ist. Bei einer fehlerfreien Litze können die Draht-Litzen-Winkel γ vorzugsweise für alle Drähte konstant sein, das heißt, daß die benachbarten Drähte im wesentlichen parallel zueinander angeordnet sind.

Vorzugsweise umfaßt der zumindest eine bestimmte Gütewert einen Geometriegütewert G_{G}, welcher mittels einer Geometriegütenorm
- als Funktion eines geometrischen Abstands zwischen der bestimmten bildlichen Längserstreckung Jₘ der Drähte und der Sollwerte der bildlichen Längserstreckung J₀ der Drähte und/oder
- als Funktion eines geometrischen Abstandes zwischen den bestimmten bildlichen Längserstreckungen Jₘ zumindest zweier benachbarter Drähte bestimmt wird.

Bevorzugt kann auf Grundlage der bereitgestellten Sollwerte der bildlichen Längserstreckung J₀ der Drähte und der mittels des Anpassens bestimmten tatsächlichen bildlichen Längserstreckung Jₘ der Drähte der Geometriegütewert G_{G} berechnet werden. Der Geometriegütewert G_{G} gibt vorzugsweise an, inwieweit die tatsächliche Längserstreckung Jₘ von dem Sollwert der bildlichen Längserstreckung J₀ abweicht. Der Geometriegütewert G_{G} kann beispielsweise durch die Bestimmung eines euklidschen Abstands als bevorzugter Geometriegütenorm zwischen den beiden Längserstreckungen und/oder zwischen ausgezeichneten Punkten innerhalb der beiden Längserstreckungen ermittelt werden. Alternativ oder zusätzlich kann die Geometriegütenorm auch eine Differenz des Drahtwinkels gemäß einem der Sollwerte und eines bestimmten tatsächlichen Drahtwinkels umfassen.

Der Geometriegütewert G_{G} kann vorzugsweise auch angeben, inwieweit die tatsächliche Längserstreckung Jₘ zweier benachbarter Drähte voneinander oder von einem dementsprechenden Sollwert der bildlichen Längserstreckung J₀ abweicht. Der Geometriegütewert G_{G} kann beispielsweise eine Differenz der bestimmten Drahtwinkel gemäß der bestimmten tatsächlichen Längserstreckungen Jₘ zweier oder mehrerer benachbarter Drähte umfassen. Eine Variation des Drahtwinkels kann beispielsweise eine Verschiebung bzw. Verwerfung zweier benachbarter Drähte indizieren.

Vorzugsweise umfaßt das Verfahren weiter den Schritt des Bestimmens einer Helligkeitsverteilungsfunktion entlang der bestimmten bildlichen Längserstreckung der Drähte, wobei der zumindest eine bestimmte Gütewert einen Stetigkeitsgütewert G_{S} umfaßt, welcher mittels einer Stetigkeitsgütenorm als Funktion der Helligkeitsverteilungsfunktion, der ersten Ableitung der Helligkeitsverteilungsfunktion und/oder der zweiten Ableitung der Helligkeitsverteilungsfunktion und/oder deren Momente n-ter Ordnung mit n=0, 1, 2 bestimmt wird.

Bevorzugt wird die bestimmte bildliche Längserstreckung Jₘ eines der Drähte durch eine durchgängige Linie zwischen zwei Endpunkten parametrisiert. Weiter bevorzugt wird die durchgängige Linie derart gewählt, daß der Verlauf der Linie im wesentlichen mit der Mittellinie entlang des Drahtes zusammenfällt. Einer der in dem Bilddatensatz enthaltenen Werte, beispielsweise der Helligkeitswert des Bildes, wird entlang der Linie bzw. entlang eines Bandes mit vorbestimmter Breite, in welchem sich die Linie befindet, bestimmt, so daß daraus die Helligkeitsverteilungsfunktion entlang der Linie resultiert.

Bevorzugt ist die resultierende Helligkeitsverteilungsfunktion von fehlerfreien Drähten im wesentlichen eine konstante Funktion, welcher lediglich durch einen Mittelwert der Helligkeitswerte charakterisiert werden kann. Eine Fehlerstelle des Drahtes kann zu einer Variation der Helligkeitsverteilungsfunktion führen. Beispielsweise kann ein Bruch des Drahtes zu einer intervallweisen Änderung des Mittelwertes der Helligkeitsverteilungsfunktion führen. Mit anderen Worten kann die Helligkeitsverteilungsfunktion beispielsweise ein Intervall enthalten, in welchem die Helligkeitsverteilungsfunktion geringere Werte aufweist, beispielsweise um 50 Prozent reduzierte Werte gegenüber den das Intervall umgebenen Werten oder Werte nahe bei Null. Diese beispielhaften Abweichungen können durch das erste und/oder zweite statistische Moment charakterisiert werden. Bevorzugt kann der Stetigkeitsgütewert die Varianz oder die mittlere Varianz der Helligkeitsverteilungsfunktion umfassen.

Als weiteres Beispiel können Kerben oder lokale Beschädigungen (z.B. durch Blitzeinschlag) im Draht zu einer unregelmäßigen Helligkeitsverteilungsfunktion führen. Solche Unregelmäßigkeiten können beispielsweise zu intervallmäßigen Änderungen in der ersten und/oder zweiten Ableitung der Helligkeitsverteilungsfunktion führen, welche sich durch eine lokale Änderung des Mittelwertes in der ersten bzw. zweiten Ableitung auszeichnen. Diese Änderungen in den Ableitungen können bevorzugt durch das erste und/oder zweite statistische Moment der jeweiligen Ableitung charakterisiert werden. Bevorzugt kann der Stetigkeitsgütewert die Varianz oder die mittlere Varianz der ersten oder zweiten Ableitung der Helligkeitsverteilungsfunktion umfassen.

Besonders bevorzugt kann mittels einer Stetigkeitsgütenorm, welche auf Grundlage des Mittelwerts und/oder der Varianz der Helligkeitsverteilungsfunktion, der ersten Ableitung der Helligkeitsverteilungsfunktion und/oder der zweiten Ableitung der Helligkeitsverteilungsfunktion berechnet wird, eine Abweichung der bestimmten Helligkeitsverteilungsfunktion von einer erwarteten Sollverteilung der Helligkeitsverteilungsfunktion charakterisiert werden. Beispielsweise kann die Stetigkeitsgütenorm eine gewichtete Summe aus den Mittelwerten und/oder Varianzen der Helligkeitsverteilungsfunktion bzw. deren Ableitungen umfassen.

Vorzugsweise umfaßt das Verfahren weiter die Schritte:
- Bestimmen des lokalen bildlichen Durchmessers Dₘ des Seils in dem Bilddatensatz;
- Bereitstellen von Sollwerten des lokalen Durchmessers D₀;
- Bestimmen eines Durchmessergütewertes mittels einer Durchmessergütenorm als Funktion des bestimmten bildlichen Durchmessers Dₘ und der Sollwerte des lokalen Durchmessers D₀.

Der lokale bildliche Durchmessers Dₘ des Seils kann auf einem Abschnitt entlang der Längserstreckung des Seils in dem Bilddatensatz beschränkt sein, beispielsweise auf eine Länge von etwa 20 oder etwa 100 Bildpunkten oder auf eine entsprechende Länge des tatsächlichen Seils von etwa 10 mm oder etwa 50 mm.

Die Bestimmung des lokalen Durchmessers Dₘ erfolgt entlang einer Durchmesserrichtung senkrecht zu der Längserstreckung bzw. Längsrichtung L des Seils. Bevorzugt kann der Durchmesser durch eine Abstandsbestimmung von zwei sich entlang der Längserstreckung bzw. Längsrichtung L erstreckenden Einhüllenden des Seils bestimmt werden. Die Einhüllenden können beispielsweise durch eine Hilbert-Transformation der beiden Seilkonturlinien bestimmt werden.

Bevorzugt ist der bereitgestellte Sollwert des lokalen Durchmessers D₀ über die gesamte Seillänge konstant. Bevorzugt kann auf Grundlage des/der bereitgestellten Sollwerte(s) und des bestimmten tatsächlichen lokalen Durchmessers Dₘ der Durchmessergütewertes G_{D} berechnet werden. Der Durchmessergütewert G_{D} gibt vorzugsweise an, inwieweit der tatsächliche lokale Durchmesser Dₘ von dem Sollwert des Durchmessers D₀ abweicht, beispielsweise mittels des euklidschen Abstands zwischen den beiden Durchmesserwerten als bevorzugter Durchmessergütenorm. Eine Variation des Durchmessergütewertes G_{D} kann beispielsweise eine Aufweitung bzw. ein Einfallen des Seils indizieren.

Vorzugsweise umfaßt der Schritt des Bereitstellens von Sollwerten der räumlichen Erstreckung der Litzen und/oder der räumlichen Erstreckung der Drähte die folgende Schritte:
- Auswählen eines Bilddatensatzes;
- Bestimmen von zumindest zwei Stützpunkten und einer durch die Stützpunkte definierte Verbindungslinie derart, daß die Verbindungslinie im wesentlichen zusammenfällt mit
   -- einer Grenzlinie zwischen zwei benachbarten Litzen oder
   -- einer Grenzlinie zwischen zwei benachbarten Drähten oder
   -- einer Mittellinie einer Litze oder
   -- einer Mittellinie eines der Drähte;
- Abspeichern der Stützpunkte auf einem Speichermedium.

Bevorzugt können die Sollwerte anhand eines ausgewählten, insbesondere repräsentativen, Bilddatensatzes bestimmt werden. Weiter bevorzugt kann ein oder können mehrere Sollwert(e) aufgrund von seilspezifischen Herstellerangaben bestimmt werden, beispielsweise aufgrund eines numerischen Seilmodells und den seilspezifischen charakteristischen Größen, z.B. Seildurchmesser, Litzenzahl, Litzendurchmesser, Wicklungstyp, Drahtstärke, Drahtanzahl, Durchmesser der Seileinlage, Durchmesser der Litzeneinlage und so weiter.

Bevorzugt werden zumindest zwei oder mehr Stützpunkte bestimmt, durch welche eine Verbindungslinie definiert wird. Die Anzahl der Stützpunkte kann 2, 3, 4, 5, 6, 7, oder eine andere natürliche Zahl sein. Die Verbindungslinie kann zwischen den Stützpunkten durch lineare oder kubische Interpolation festgelegt sein. Weiter kann ein Spline die Stützpunkte als Verbindungslinie miteinander verbinden. Die Stützpunkte können jedoch auch eine Regressionsgerade oder ein Regressionspolynom oder eine andere Regressionsfunktion definieren, wobei die Stützpunkte nicht auf der Regressionsfunktion liegen müssen.

Die Stützpunkte können derart bezüglich des Bilddatensatzes positioniert werden, daß die durch die Stützpunkte definierte Verbindungslinie mit einer Grenzlinie zwischen zwei benachbarten Litzen oder mit einer Grenzlinie zwischen zwei benachbarten Drähten oder mit einer Mittellinie einer Litze oder mit einer Mittellinie eines Drahtes. Eine derart ermittelte Verbindungslinie kann die Längserstreckung eines Drahtes und/oder einer Litze charakterisieren und kann als initialer Startwert zur Anpassung und Bestimmung einer tatsächlichen Längserstreckung verwendet werden.

Um die Stützpunkte bzw. die Verbindungslinie(n) dem Prüfverfahren als Sollwerte bereitzustellen, können die Stützpunkte und/oder die Verbindungslinien bevorzugt auf ein Speichermedium übertragen werden.

Vorzugsweise umfaßt das Verfahren weiter den Schritt der Zuordnung des Gütewerts zu den zugehörigen diskriminierten räumlichen Positionen entlang des Seils. Vorteilhafterweise können Seilabschnitte mit potentiellen ermittelten Seilfehler schnell aufgefunden werden, insbesondere um eine visuelle Überprüfung dieser Seilabschnitte am Seil selbst und/oder anhand der bildlichen Darstellung des Seils durchzuführen.

Weiter bevorzugt kann das Verfahren den Schritt der Zuordnung eines Bewertungsmerkmals, insbesondere anhand des zumindest einen Gütewertes, zu den zugehörigen diskriminierten räumlichen Positionen entlang des Seils umfassen. Beispielhafte Bewertungsmerkmale können Klassifizierungen der möglichen Seilfehler umfassen, wie z.B. "Drahtbruch", "Litzenverwerfung", "Kerbe", "Blitzeinschlag" usw. Das Bewertungsmerkmal könnte auch einen Score-Wert umfassen, der die Schwere des Fehlers oder die Bestimmungssicherheit wiedergibt. Insbesondere können ein oder mehrere Bewertungsmerkmale in ein Fehlerprotokoll aufgenommen werden, um es einem Benutzer des Verfahrens vorteilhafterweise in einfacher Weise zu ermöglichen, die ermittelten Seilfehler zu erfassen.

### Computerprogrammprodukt

Ein Aspekt der vorliegenden Erfindung betrifft ein Computerprogrammprodukt, insbesondere verkörpert als ein Signal und/oder als ein Datenstrom, welches computerlesbare Instruktionen umfaßt, wobei die Instruktionen ein erfindungsgemäßes Verfahren, insbesondere wie vorgehend beschrieben, durchführen, wenn sie auf einem geeigneten Computersystem geladen und ausgeführt werden. Mit anderen Worten wird ein Computerprogrammprodukt bereitgestellt, welches Programmteile zur Durchführung des erfindungsgemäßen Verfahrens oder einer bevorzugten Ausführungsform davon umfaßt. Ferner wird ein Computerprogramm bereitgestellt, welches, wenn auf einen Computer geladen, das Verfahren gemäß der Erfindung oder einer bevorzugten Ausführungsform ausführen kann. Ferner wird ein computerlesbares Speichermedium bereitgestellt, auf dem ein solches Computerprogramm gespeichert ist.

### System

Ein Aspekt der Erfindung betrifft ein System zum optischen Prüfen eines Seils umfassend:
- zumindest eine Bilddatenerfassungseinrichtung, welche ausgelegt ist zumindest einen Abschnitt des Seils optisch zu erfassen;
- eine Sollwertspeichereinheit, welche ausgelegt ist Sollwerte der Längserstreckung K₀ der Litzen und/oder der Längserstreckung J₀ der Drähte, insbesondere relativ zu der Längserstreckung K₀ der Litzen, einer Diskriminierungseinheit bereitzustellen;
- eine Bilddatenauswerteeinheit, welche ausgelegt ist, eine Längserstreckung Kₘ der Litzen in dem erfaßten Abschnitt des Seils und/oder die Längserstreckung Jₘ der Drähte in dem erfaßten Abschnitt des Seils, insbesondere relativ zu der bestimmten Längserstreckung Kₘ der Litzen, zu bestimmen;
- die Diskriminierungseinheit, welche ausgelegt ist, zumindest einen Gütewert mittels einer Gütenorm als Funktion der bestimmten Längserstreckung Jₘ der Drähte und der Sollwerte der Längserstreckung J₀ der Drähte und/oder zumindest einen Gütewert mittels einer Gütenorm als Funktion der bestimmten Längserstreckung Kₘ der Litzen und der Sollwerte der Längserstreckung K₀ der Litzen zu bestimmen sowie die bildlichen Positionen innerhalb des Bilddatensatzes des Seils, an denen zumindest ein Gütewert einen vorbestimmten zugeordneten Gütegrenzwert überschreitet oder unterschreitet zu diskriminieren; und
- eine Ausgabeeinheit.

Vorzugsweise ist die Diskriminierungseinheit ausgelegt, die Zuordnung des Gütewerts zu den zugehörigen diskriminierten räumlichen Positionen entlang des Seils durchzuführen.

Vorzugsweise umfaßt das System eine Seilbewertungseinheit, welche ausgelegt ist, den durch die Diskriminierungseinheit diskriminierten bildlichen oder räumlichen Positionen entlang des Seils ein Bewertungsmerkmal zuzuordnen.

Vorteilhafterweise kann ein menschlicher Prüfer anhand eines von der Ausgabeeinheit ausgegebenen Protokolls alle potentiellen Seilfehler sowie deren Position mitgeteilt bekommen. Eine visuelle Überprüfung kann vorteilhafterweise durch das erfindungsgemäße System auf einen Bruchteil der gesamten Seillänge reduziert werden. Weiter vorteilhafterweise wird die Seilprüfung auch unter dem Aspekt der Arbeitssicherheit für den betreffenden Prüfer verbessert.

### Figurenbeschreibung

Nachfolgend werden bevorzugte Ausführungsformen der vorliegenden Erfindung anhand der beigefügten Zeichnungen beispielhaft erläutert. Einzelne Merkmale der gezeigten bevorzugten Ausführungsformen können zu weiteren bevorzugten Ausführungsformen kombiniert werden. Es zeigen:
- Figur 1:: ein Litzenseil als ein beispielhaftes Seil;
- Figur 2:: charakteristische Konstruktionsgrößen eines Litzenseils;
- Figur 3:: eine schematische bevorzugte Bilddatenerfassungseinrichtung;
- Figur 3a:: eine bevorzugte Bilddatenerfassungseinrichtung;
- Figur 4:: einen bevorzugten Schritt zum Erfassen von seilspezifischen Sollwerten;
- Figur 5:: einen bevorzugten Schritt zum Erfassen von seilspezifischen Sollwerten;
- Figur 6:: beispielhafte bestimmte Sollwerte;
- Figur 7:: eine bevorzugte automatische Bestimmung des lokalen Durchmessers des Seils;
- Figur 7a:: beispielhaft bestimmte lokale Durchmesser des Seils;
- Figur 8:: eine bevorzugte automatische Bestimmung der Schlaglänge;
- Figur 8a:: beispielhaft bestimmte lokale Schlaglänge des Seils;
- Figur 9:: eine automatische Erkennung von Drahtverwerfungen bzw. -verwerfungen in einem Bilddatensatz;
- Figur 10:: eine bevorzugte Erkennung von Drahtbrüchen; und
- Figur 11:: ein beispielhaftes Ergebnis des Prüfverfahrens.

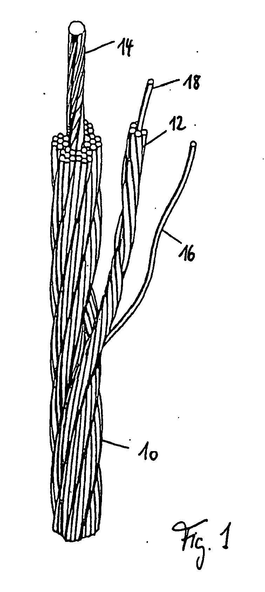

**Figur 1** zeigt als bevorzugtes Seil 10 ein Litzenseil 10 als ein beispielhaftes Drahtseil. Litzenseile 10 umfassen mehrere Litzen 12, welche schraubenlinienförmig um eine Seileinlage 14 gewunden sind. Die Litzen 12 bestehen aus einer oder mehreren Lagen von Drähten 16, welche schraubenlinienförmig um eine Litzeneinlage 18 gewunden bzw. verseilt oder geschlagen sind. Der gebräuchliche Begriff "Schlagen" wird im folgenden synonym für den Begriff "Verseiten" verwendet. Die Litzeneinlage 18 kann beispielsweise aus einer Kunststoffaser oder einem Draht bestehen. Bevorzugt sind die Litzen 12 aus Drähten 16 und einer Litzeneinlage 18 ähnlichen, bevorzugt im wesentlichen gleichen, Durchmessers ausgebildet. Weiter bevorzugt sind zur Ausbildung der Litze 12 sechs Drähte 16 um die Litzeneinlage 18 herum angeordnet. Die Seileinlage 14 kann aus Faserstoffen, insbesondere aus Kunststoff, oder zumindest einem Draht bestehen oder ihrerseits als Litze oder Seil ausgebildet sein. Bevorzugt ist das Litzenseil 10 aus Litzen 12 und einer Seileinlage 14 ähnlichen, bevorzugt im wesentlichen gleichen, Durchmessers ausgebildet. Weiter bevorzugt sind zur Ausbildung des Seils 10 vier bis zehn Litzen 12 um die Seileinlage 14 herum angeordnet. In der gezeigten besonders bevorzugten Ausführungsform sind sechs Litzen 12 um die Seileinlage 14 herum angeordnet.

Seile bzw. Litzenseile 10 der in Figur 1 gezeigten Art werden als laufende Seile, als stehende Seile oder als Tragseile aus verschiedenen Gebieten der Technik eingesetzt. Als "laufende Seile" werden dabei Seile bezeichnet, die über Treibscheiben, Seilscheiben und Trommeln laufen und dabei deren Krümmungen annehmen, z.B. Hubseile, Einziehseile, Fahrseile von Kranen, Aufzugseile, Schrapperseile und Zugseile von Seilbahnen. Unter "stehenden Seilen", auch Abspannseile genannt, werden Seile verstanden, die nicht über Seilscheiben laufen und deren Enden in Festpunkten gelagert sind, wie beispielsweise Abspannseile für Masten und Ausleger und Führungsseile für Aufzüge und Schachtförderanlagen sowie Ankertrossen für Schwimmbagger mit und ohne Ankerwinden. Tragseile sind Seile, auf denen beispielsweise Rollen von Fördermitteln laufen, beispielsweise Fördermittel von Seilbahnen, Kabelkranen und Kabelschrappern. Tragseile erfüllen dabei eine ähnliche Funktion wie Laufschienen. Der Krümmungsradius eines Tragseils unter der Laufrolle ist größer als der Laufrollenradius. Es versteht sich, daß die verschiedenen Seile je nach Anwendung aus unterschiedlichen Materialien bestehen können, beispielsweise aus Kunststoff wie Aramid, Dyneema, Polyamid oder aus Stahl, Edelstahl oder verzinktem Stahl.

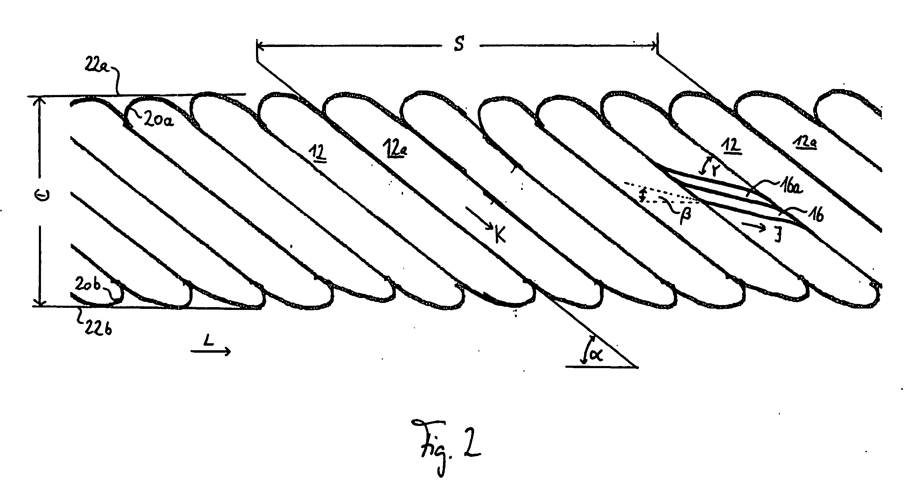

Alle Seiltypen haben bestimmte, eindeutige Konstruktionsmuster, die in einer digitalen Bildanalyse erkannt werden können. **Figur 2** verdeutlicht die charakteristischen Konstruktionsgrößen eines Litzenseils 10. Senkrecht zu einer Längsrichtung L des Litzenseils 10 wird der Durchmesser D des Litzenseils 10 gemessen. Bevorzugt kann der Durchmesser D durch eine optische Erfassung des Litzenseils 10 und einer anschließenden Abstandsbestimmung der beiden sich entlang der Längsrichtung L erstreckenden Einhüllenden 22a, 22b der zugeordneten erfaßten Litzenseilkonturlinien 20a, 20b gemessen werden. Die Einhüllenden 22a, 22b können beispielsweise durch eine Hilbert-Transformation der erfaßten Litzenseilkonturlinien 20a, 20b bestimmt werden.

Weitere charakteristische Größen des Litzenseils 10 sind die Schlaglänge S und der Schlagwinkel α der Litzen 12, 12a gegenüber der Längsrichtung L. Die Schlaglänge S beschreibt, in welchem Abstand entlang der Längsrichtung L des Seils 10 eine Litze 12 eine vollständige Umwicklung der Seileinlage 14 vollführt hat. Der Schlagwinkel α kann als der Winkel definiert sein, welcher zwischen der Längsrichtung L des Seils 10 und Längsrichtung K der Litze 12 eingeschlossen ist. Bei einem fehlerfreien Seil ist die Längsrichtungen K zweier benachbarter Litzen 12, 12a parallel zueinander, so daß der Schlagwinkel a als charakteristische Größe für alle Litzen 12, 12a verwendet werden kann.

Eine weitere charakteristische Größe des Litzenseils 10 ist der Drahtwinkel B der einzelnen Drähte 16, 16a gegenüber der Längsrichtung L des Seils 10. Der Drahtwinkel β kann als der Winkel definiert sein, welcher zwischen der Längsrichtung L des Seils 10 und Längsrichtung J der Drähte 16, 16a eingeschlossen ist. Bei einem fehlerfreien Seil ist die Längsrichtungen J zweier benachbarter Drähte 16, 16a abschnittsweise im wesentlichen parallel zueinander. Das heißt, daß die benachbarten Drähte 16, 16a zueinander benachbart, insbesondere mechanisch kontaktierend, um die Litzeneinlage gewunden sind. Der Drahtwinkel β kann daher als charakteristische Größe für alle Drähte 16, 16a verwendet werden.

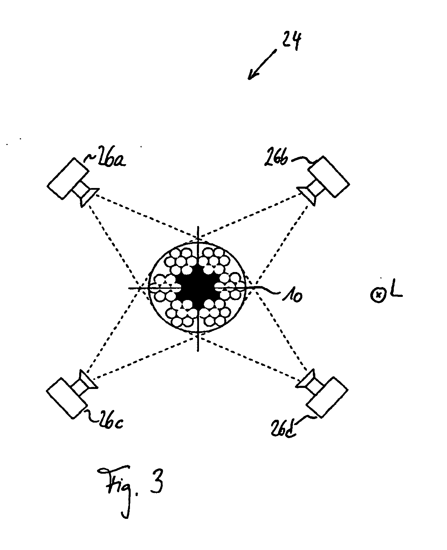

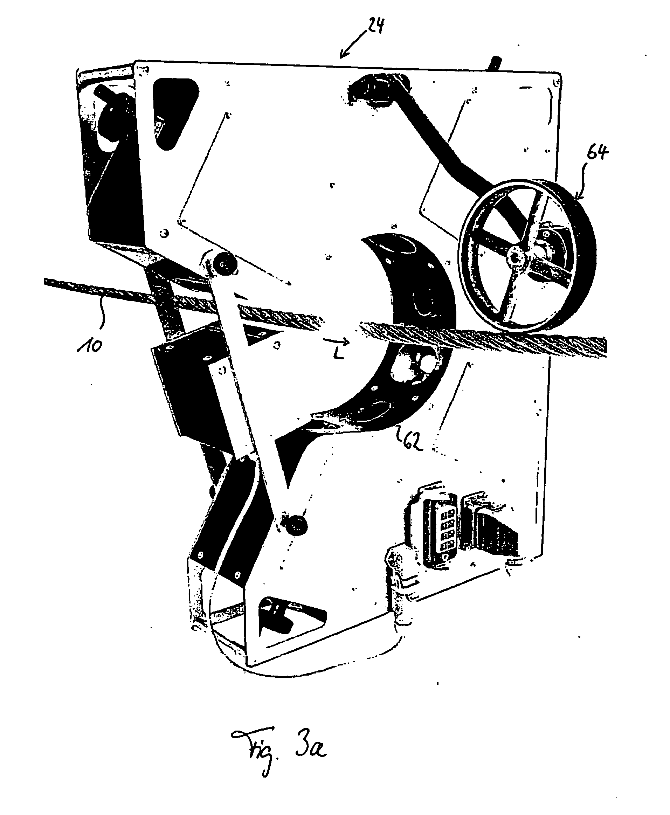

**Figur 3** zeigt eine schematische Bilddatenerfassungseinrichtung 24, welche ausgelegt ist, ein Seil 10 in einem Bilddatensatz zu erfassen. Die Bilddatenerfassungseinrichtung 24 umfaßt in einer bevorzugten Ausführungsform 3 bis 5, insbesondere 4, Kameras 26a-26d, welche in einer Ebene senkrecht zur Längsrichtung L des Seils 10 angeordnet sind. Die Kameras 26a-26d sind bevorzugt Zeilenkameras bzw. CCD-Kameras. Jede der Kameras 26a-26d deckt einen zugeordneten Quadranten von etwa 90 Grad der Seilmantelfläche ab, so daß ein Bilddatensatz bereitgestellt werden kann, welcher Seilmantelfläche vollumfänglich beinhaltet. Das Seil 10 ist relativ zur Bilddatenerfassungseinrichtung 24 entlang bzw. entgegen der Längsrichtung L verschiebbar. Es versteht sich, daß im Falle eines stationären Seils auch die Bilddatenerfassungseinrichtung 24 verschoben werden kann. Bevorzugt kann die Relativgeschwindigkeit zwischen Seil 10 und Kameras 26a-26d bis zu etwa 5 m/s betragen.

Bevorzugt sind die Kameras 26a-26d innerhalb der Bilddatenerfassungseinrichtung 24 relativ zum Seil verlagerbar, um die Bilddatenerfassungseinrichtung 24 auf Durchmesser des zu prüfenden Seils einzustellen. Die Ausleuchtung des Seils 10 kann bevorzugt mit künstlichen Lichtquellen erfolgen, welche einen verbessteren Kontrast in dem Bilddatensatz erlauben. Insbesondere kann die Bilddatenerfassungseinrichtung 24 Hochleistungs-LEDs als Lichtquelle aufweisen.

**Figur 3a** zeigt eine Bilddatenerfassungseinrichtung 24, welche ausgelegt ist, ein Seil 10 in einem Bilddatensatz zu erfassen. Die Bilddatenerfassungseinrichtung 24 umfaßt in der bevorzugten Ausführungsform 4 Kameras (nicht gezeigt), welche in einer Ebene senkrecht zur Längsrichtung L des Seils 10 um eine Seildurchführöffnung 62 der Bilddatenerfassungseinrichtung 24 angeordnet sind. Das Seil 10 ist durch die Seildurchführöffnung 62 relativ zur Bilddatenerfassungseinrichtung 24 entlang bzw. entgegen der Längsrichtung L verschiebbar. Es versteht sich, daß im Falle eines stationären Seils auch die Bilddatenerfassungseinrichtung 24 verschoben werden kann. Weiter bevorzugt weißt die Bilddatenerfassungseinrichtung 24 eine Seilvorschubmeßeinrichtung 64 auf, welche die Länge des entlang bzw. entgegen der Längsrichtung L verschobenen Seils 10 messen bzw. erfassen kann. Insbesondere kann ein Meßrad 64 als bevorzugte Seilvorschubmeßeinrichtung 64 vorgesehen sein, welches in Reibschluß mit dem Seil 10 steht und deshalb durch den Vorschub des Seils 10 gedreht wird. Mit dem Meßrad 64 kann beispielsweise ein Impulsgeber verbunden sein, so daß eine Drehung des Meßrades 64 um einen vorbestimmte Winkel einen registrierbaren Impuls erzeugt. Die Anzahl der Impulse kann während des Vorschubs des Seils 10 registriert bzw. gezählt und einzelnen Bildern des Bilddatensatzes zugeordnet werden. Vorteilhafterweise ist es mittels der Seilvorschubmeßeinrichtung 64 bzw. dem Meßrad 64 möglich, erfaßte Bilddaten bzw. einen Teil des Bilddatensatzes einer geometrischen Position entlang des Seils 10 zuzuordnen.

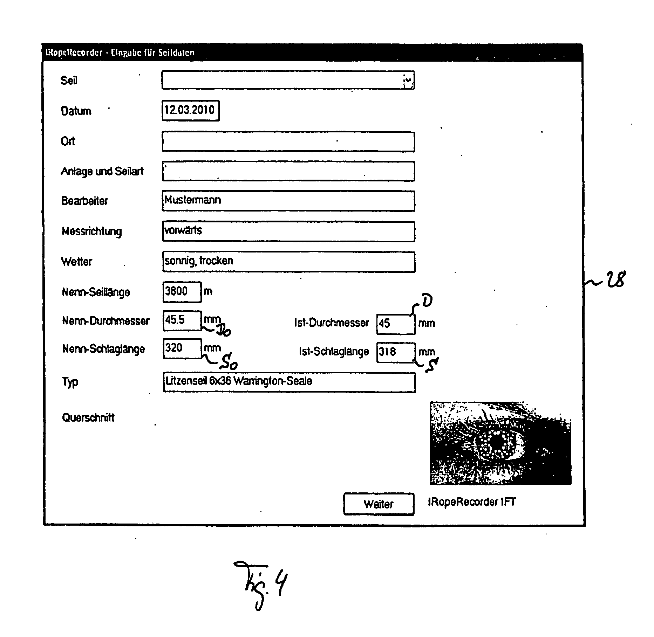

**Figur 4** zeigt einen Schritt zum Erfassen von seilspezifischen Sollwerten mittels einer Dateneingabemaske 28. Die Dateneingabemaske 28 umfaßt beispielsweise die vom Hersteller angegebene Schlaglänge S₀ sowie den Sollwert des Durchmessers D₀. Die anhand eines repräsentativen Seilabschnitt ermittelten tatsächlichen Werte des Durchmessers Dₘ und der Schlaglänge Sₘ sind eingebbar und können als Vergleichswert für die Bestimmung von Abweichungen bezüglich des lokalen Durchmessers und der Schlaglänge verwendet werden.

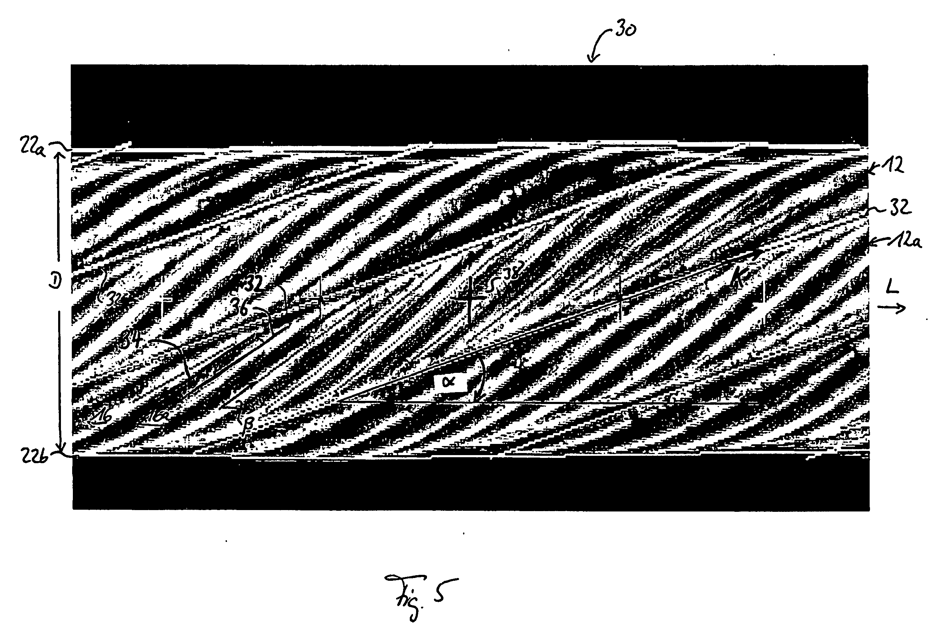

**Figur 5** zeigt einen weiteren Schritt zum Erfassen von seilspezifischen Sollwerten anhand mittels eines einen Seilabschnitt 30 enthaltenen Bilddatensatzes. Manuell oder automatisch können die Einhüllenden 22a, 22b des Seilabschnitts 30 festgelegt werden, mit deren Hilfe die Längserstreckung L des Seilabschnitts 30 sowie der Durchmesser Dₘ in dem Seilabschnitt bestimmt werden können. Beispielsweise durch einen Benutzer können weiter zumindest zwei Stützpunkte festgelegt werden, beispielsweise durch Betätigen eines Bedienelements einer Anzeigevorrichtung, welche den Seilabschnitt 30 darstellt, wobei die Stützpunkte eine gerade Verbindungslinie bzw. Schlaglinie 32 derart definieren, daß die Verbindungslinie der Grenzlinie zwischen zwei benachbarten Litzen 12, 12a entspricht. Dieser Schritt kann für mehrere Grenzlinien zwischen mehreren Litzen durchgeführt werden. Mittels zumindest einer bestimmten Verbindungs- bzw. Schlaglinien 32, welche parallel zur Längsrichtung K der Litze 12 verläuft, kann der Schlagwinkel α relativ zur Längsrichtung bzw. Längserstreckung L des Seilabschnitts 30 bestimmt werden. Weiter kann ein Referenzpunkt 38 bestimmt werden, welcher im wesentlichen mittig zwischen zwei Schlaglinien 32 angeordnet ist, und als Referenz für die Mitte der Litze 12 verwendet werden kann, beispielsweise um die Stützpunkte für die Sollwerte der einzelnen Drähte 16, 16a relativ zu diesem Referenzpunkt, also relativ zur Litze 12, zu bestimmen.

Entsprechend können weitere Stützpunkte festgelegt werden, welche eine im wesentlichen gerade Verbindungslinie bzw. Drahtgrenzlinie 34 derart definieren, daß die Verbindungslinie der Grenzlinie zwischen zwei benachbarten Drähten 16, 16a entspricht. Weiter können - bevorzugt durch den Benutzer - Stützpunkte festgelegt werden, welche eine im wesentlichen gerade Verbindungslinie bzw. Drahtlinie 36 derart definieren, daß die Verbindungslinie im wesentlichen der Mittellinie eines Drahtes 16a entspricht. Mittels der Drahtgrenzlinie 34 und/oder der Drahtlinie 36 kann der Drahtwinkel β relativ zur Längsrichtung bzw. Längserstreckung L des Seilabschnitts 30 bestimmt werden.

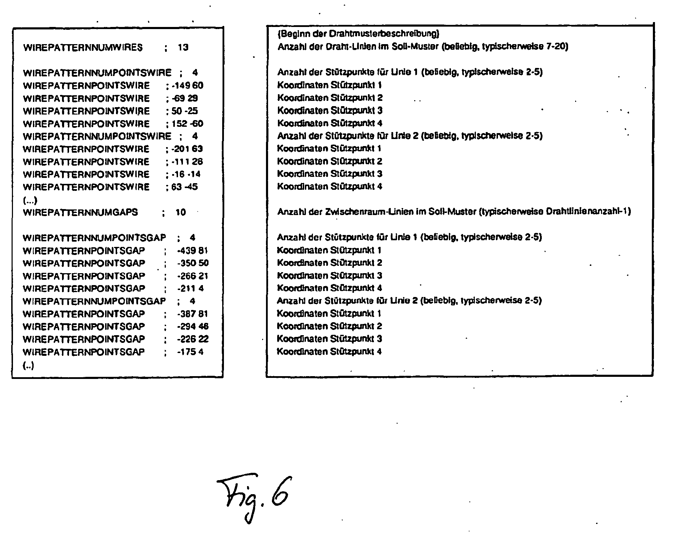

**Figur 6** zeigt die Sollwerte, die wie mit Bezug auf die Figur 5 beschrieben bestimmt wurden.

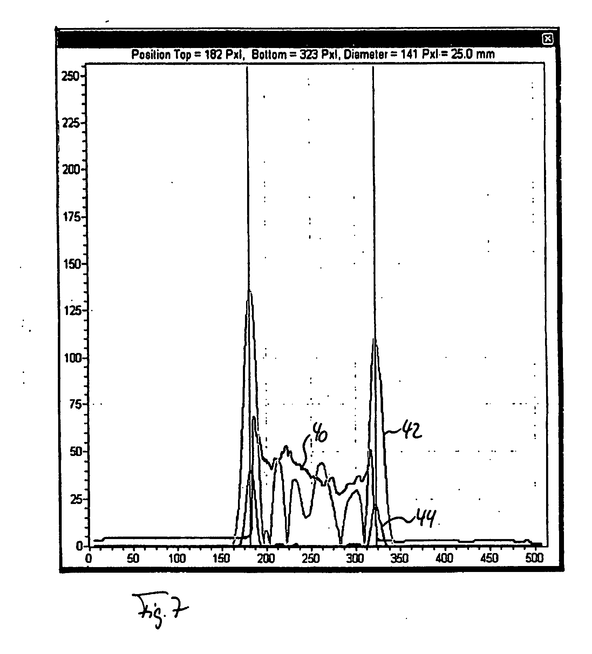

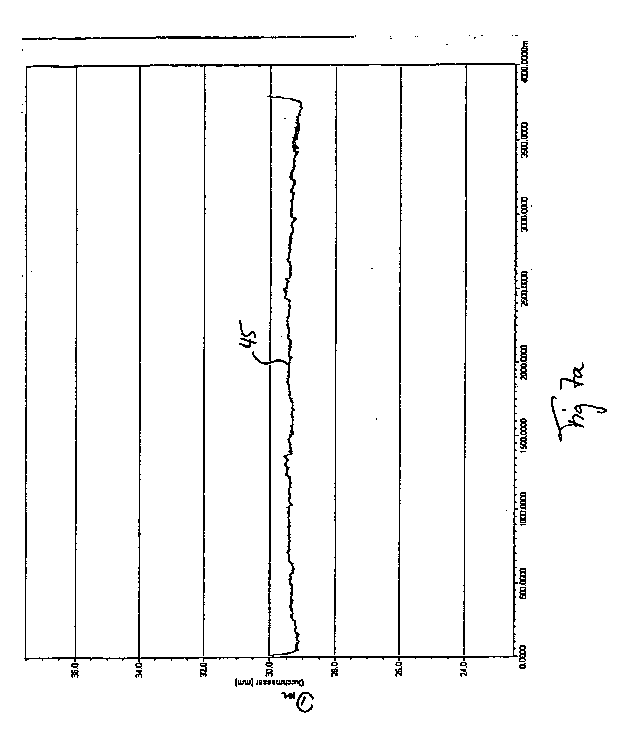

**Figur 7** zeigt die automatische Bestimmung des lokalen bildlichen Durchmessers Dₘ des Seils in dem Bilddatensatz. Bevorzugt kann die Bestimmung des lokalen Durchmessers Dₘ mittels einer Kantenerkennung erfolgen, bevorzugt auf Grundlage eines geglätteten Bilddatensatzes. Beispielsweise kann die Bestimmung des lokalen Durchmessers Dₘ auf Basis einer Durchmesserkorrelation (dargestellt in Fig. 7 als Kurve mit Bezugszeichen 40), einer berechneten Entropie (dargestellt in Fig. 7 als Kurve mit Bezugszeichen 42) und/oder einer Kantenerkennung (dargestellt in Fig. 7 als Kurve mit Bezugszeichen 44) durchgeführt werden. Der resultierende lokale Durchmesser Dₘ kann, wie in **Figur 7a** gezeigt (dargestellt als Kurve mit Bezugszeichen 45), gegen die Seillänge aufgetragen werden.

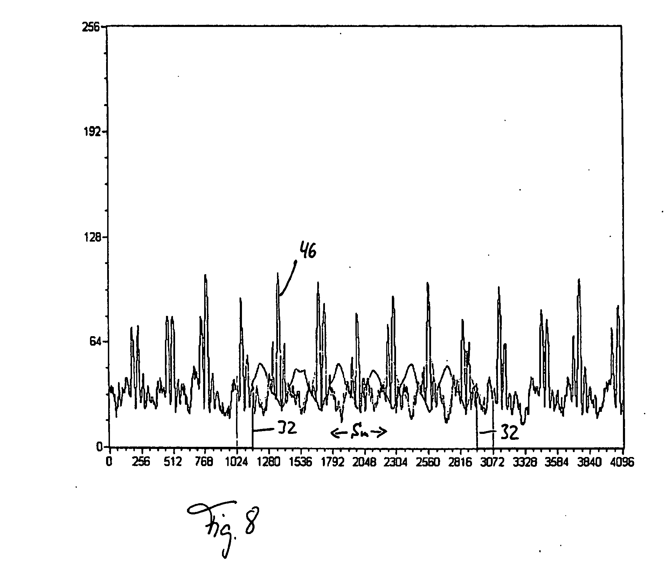

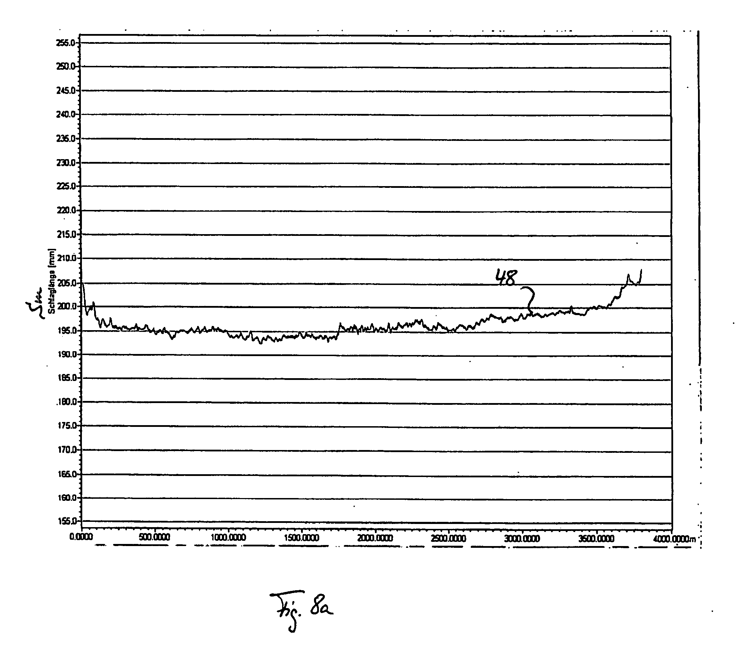

**Figur 8** zeigt die automatische Bestimmung der Schlaglänge in dem Bilddatensatz, also einer lokalisierten Schlaglänge Sₘ. Bevorzugt kann die Bestimmung der Schlaglänge Sₘ auf der Auswertung der Helligkeitswerte des Bilddatensatzes entlang der Längsrichtung bzw. Längserstreckung des Seils bzw. des Seilsabschnitts erfolgen (dargestellt in Fig. 7 als Kurve mit Bezugszeichen 46). Um den Effekt von linearen Verschiebungen zu eliminieren kann eine Transformation in den Fourierraum durchgeführt werden, wobei die räumlichen Wellenzahlen nicht mehr lokalisiert sind und eine Verschiebung des Seils entlang der Längsrichtung L das Ergebnis nicht beeinträchigt. Zur Bestimmung der Schlaglänge kann die Litzenanzahl, beispielsweise 6, und die zuvor erfaßte IST-Schlaglänge (siehe Figur 4) verwendet werden. Die Schlaglänge Sₘ kann durch die Multiplikation der Werte Litzenanzahl und Litzenbreite ermittelt werden.

Die Position von Grenzlinien zweier benachbarter Litzen, also der Schlaglinie 32, kann durch eine Kreuzkorrelation mit einer bekannten Litzenstruktur bestimmt werden, wie sie beispielsweise bei der Bestimmung der Sollwerte erfaßt werden kann. Die Grenzlinien zeichnen sich in der Regel durch gut abgegrenzte Bereiche mit niedrigen Helligkeitswerten aus, da in der Regel ein starker Schattenwurf zwischen zwei Litzen auftritt.

Die bestimmte lokale Schlaglänge Sₘ kann, wie in **Figur 8a** gezeigt (dargestellt als Kurve mit Bezugszeichen 48), gegen die Seillänge aufgetragen werden. Neben der Schlaglänge Sₘ kann weiter die Litzenmitte als Referenzpunkt für weitergehende Schritte des Prüfverfahrens bestimmt werden.

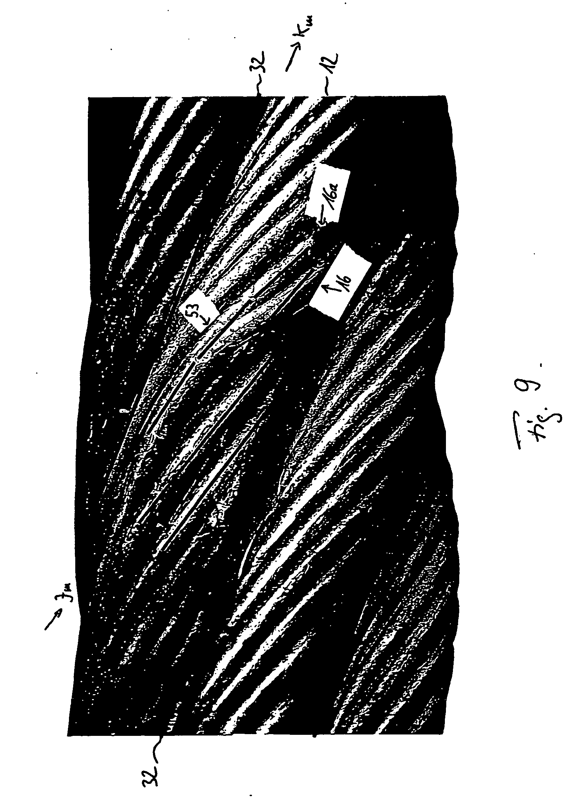

**Figur 9** zeigt schematisch die automatische Erkennung von Drahtverwerfungen bzw. -verwerfungen in einem Bilddatensatz. In einer bevorzugten Ausführungsform des Prüfverfahrens wird mit Hilfe des Geometriegütewert G_{G} bestimmt, inwieweit die tatsächliche Längserstreckung Jₘ eines Drahtes 16 von dem Sollwert der bildlichen Längserstreckung J₀ abweicht. In der gezeigten Ausführungsform des Verfahrens ist der Sollwert der Längserstreckung J₀ relativ zur Längserstreckung Kₘ der Litze 12 definiert, welche parallel zur Schlaglinie 32 verläuft. Der Geometriegütewert G_{G} ist bevorzugt als Anpassungfehler bezüglich einer Anpassung mittels einer Geraden definiert. Wie in Figur 9 gezeigt ist, ist der Draht 16 an einer Verwerfungsstelle 53 nur schlecht durch eine Gerade anpaßbar. Daher kann eine Drahtverwerfung an dieser Stelle detektiert werden. Alternativ oder zusätzlich kann auch eine bestimmte Variation der Längserstreckung zwischen benachbarten Drähten 16, 16a eine Verwerfung bzw. Verwerfung zweier benachbarter Drähte indizieren.

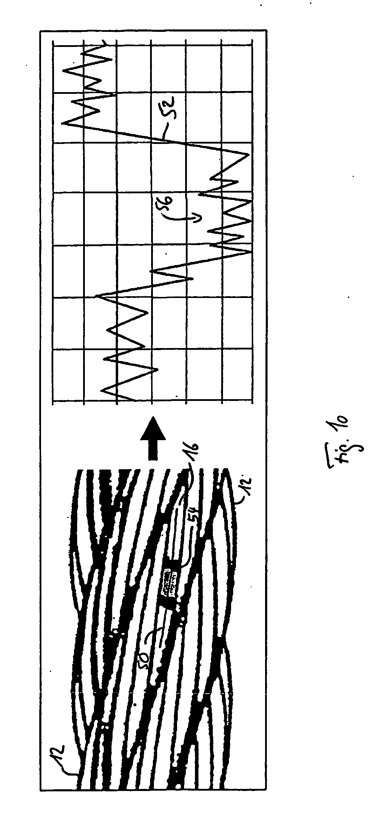

**Figur 10** zeigt schematisch die automatische Erkennung von Drahtbrüchen in einem Bilddatensatz. In einer bevorzugten Ausführungsform des Prüfverfahrens wird, wie zu Figur 8 beschrieben, anhand der detektieren Litzengrenzen bzw. der Schlaglinien 32 die Litzenmitte 38 berechnet. An der Litzenmitte 38 werden die zuvor bestimmten Sollwerte für die Längserstreckungen J₀ der Drähte 16 ausgerichtet, welche Bestandteil der Litze 12 sind. Mittels einer Anpassung, insbesondere einer iterativen Anpassung, werden die tatsächlichen Längserstreckungen Jₘ der Drähte 16 bestimmt. Sollwerte, welche eine Mittellinie eines Drahtes repräsentieren, werden derart angepasst, daß diese Mittellinien bzw. Drahtlinien möglichst hellen Stellen des Bilddatensatzes folgen. Sollwerte, welche eine Grenzlinie zwischen zwei benachbarten Drähten repräsentieren, werden derart angepaßt, daß diese Grenzlinien möglichst dunklen Stellen des Bilddatensatzes folgen. Als weitere Randbedingung der Anpassung kann vorgesehen sein, daß benachbarte Stützpunkte von Drähten und Grenzlinien zwischen Drähten sich gegenseitig verdrängen, d.h. einen maximalen Abstand zueinander einnehmen. Um die Anpassung durchzuführen ist beispielsweise die Optimierung einer mehrdimensionalen Kostenfunktion notwendig.

Für jeden erkennbaren bzw. hinreichend auflösbaren Draht 16 kann nun entlang einer zugehörigen angepaßten durchgängigen Linie 50, welche die Längserstreckung Jₘ des Drahtes 16 repräsentiert, der Helligkeitswert des Bildes bestimmt werden, so daß daraus eine Helligkeitsverteilungsfunktion 52 entlang der Linie 50 resultiert. In dem in Figur 9 gezeigten Beispiel führt eine Bruchstelle 54 des Drahtes 16 zu einer Variation der Helligkeitsverteilungsfunktion 52, so daß die Helligkeitsverteilungsfunktion 52 in einem Intervall 56 einen verringerten lokalen Mittelwert aufweist.

Veränderte lokale Mittelwerte der Helligkeitsverteilungsfunktion 52 können mittels einer Stetigkeitsgütenorm Gₛ automatisch ausgewertet werden, so daß Helligkeitswertveränderung entlang einer Linie 50 (hell-dunkel, dunkel-hell) zu einer Überschreitung des Stetigkeitsgütewertes und somit zu einer Fehlerdetektion führt. Es versteht sich, daß das vorstehend beschriebene Verfahren auch auf die Grenzlinien zwischen zwei Drähten 16 anwendbar ist und bevorzugt zusätzlich angewendet wird.

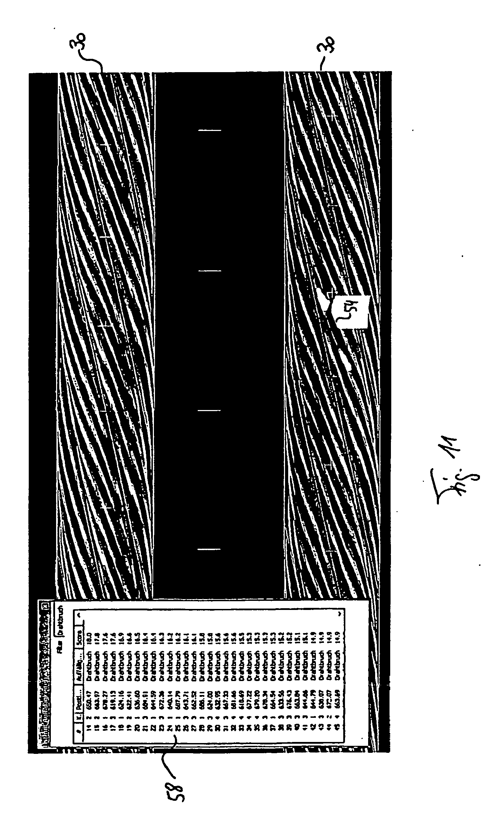

**Figur 11** zeigt das Ergebnis des Prüfverfahrens. Gemäß der ermittelten Gütewerte anhand der zugehörigen Gütenormen, die bevorzugt jeweils einen Maßstab für einen zugeordneten Seilfehler darstellen, wurden auffällige Seilabschnitte diskriminiert und mit der entsprechenden Seilposition und dem ermittelten Seilfehler in einem Fehlerprotokoll 58 zusammengefaßt. Bevorzugt stellt das Computerprogramm, welches das erfindungsgemäße Verfahren durchführt, eine Verknüpfung zwischen den Elementen des Fehlerprotokolls 58 und einer, insbesondere vollumfänglichen, bildlichen Darstellung 60, des Seilabschnitt 30 her, welcher den Fehler (beispielsweise einen Drahtbruch 54) aufweist. Vorteilhafterweise kann ein menschlicher Prüfer anhand des Fehlerprotokolls alle potentiellen Seilfehler visuell anhand der bildlichen Darstellung überprüfen bzw. verifizieren ohne den Seilabschnitt tatsächlich vor Augen zu haben. Vorteilhafterweise kann das Prüfverfahren von dem Einsatzort des Seils entfernt durchgeführt werden. Weiter vorteilhafterweise kann die visuelle Überprüfung bzw. Verifizierung auf die automatisch diskriminierten Seilabschnitte 30 beschränkt werden, so daß etwa 90 Prozent eines Seils keiner Inaugenscheinnahme durch einen menschlichen Prüfer bedarf. Weiter bevorzugt kann das Prüfverfahren und die Bewertung der diskriminierten Seilfehler automatisch erfolgen.

### Bezugszeichenliste

- 10: Seil bzw. Litzenseil
- 12, 12a: Litze
- 14: Seileinlage
- 16: Draht
- 18: Litzeneinlage
- 20a, 20b: Litzenseilkonturlinie
- 22a, 22b: Einhüllende der Litzenseilkonturlinie
- 24: Bilddatenerfassungseinrichtung
- 26a-26d: Kamera
- 28: Dateneingabemaske
- 30: Seilabschnitt
- 32: Verbindungslinie bzw. Schlaglinie
- 34: Verbindungslinie bzw. Drahtgrenzlinie
- 36: Verbindungslinie bzw. Drahtlinie
- 40: Durchmesserkorrelationsfunktion
- 42: Entropiefunktion
- 44: Kantenerkennungsfunktion
- 45: Funktion des lokalen Durchmessers Dₘ
- 46: Funktion der Helligkeitswerte entlang der Längsrichtung L
- 48: Funktion der lokalen Schlaglänge Sₘ
- 50: angepaßte Linie
- 52: Helligkeitsverteilungsfunktion
- 53: Verwerfungsstelle
- 54: Bruchstelle
- 56: Intervall
- 58: Fehlerprotokoll
- 60: bildlichen Darstellung
- 62: Seildurchführöffnung
- 64: Seilvorschubmeßeinrichtung
- D, D₀, Dₘ: Durchmesser
- G_{D}, G_{S}, G_{G}: Gütewert
- J, J₀, Jₘ: Längsrichtung
- K, Ko, Kₘ: Längsrichtung
- L: Längsrichtung
- S, S₀, Sₘ: Schlaglänge
- α: Schlagwinkel
- β: Drahtwinkel
- γ: Draht-Litzen-Winkel

## Patentansprüche

1. Verfahren zum computergestützten, optischen Prüfen eines Seils (10), das mehrere Drähte (16, 16a) oder Fasern aufweist, umfassend:
- Bereitstellen eines Bilddatensatzes zu zumindest einem Abschnitt (30) des Seils (10);
**gekennzeichnet durch** das
- Bereitstellen von Sollwerten der bildlichen Längserstreckung der Darstellung von Drähten (16, 16a) oder Fasern relativ zu der bildlichen Längserstreckung des Seils (10) in dem Bilddatensatz ;
- Bestimmen der bildlichen Längserstreckung der Drähte (16, 16a) oder Fasern in dem Bilddatensatz, wobei das Bestimmen ein Anpassen einer angenommenen Längserstreckung an den Bilddatensatz umfaßt;
- Bestimmen zumindest eines Gütewertes mittels einer Gütenorm als Funktion der bestimmten bildlichen Längserstreckung der Drähte (16, 16a) oder Fasern und der Sollwerte der bildlichen Längserstreckung der Drähte (16, 16a) oder Fasern;
- Diskriminieren von bildlichen Positionen innerhalb des Bilddatensatzes des Seils (10), an denen zumindest ein Gütewert einen vorbestimmten zugeordneten Gütegrenzwert überschreitet oder unterschreitet;
- Bereitstellen der diskriminierten bildlichen Positionen.

2. Verfahren nach Anspruch 1, zum Prüfen eines Seils, das mehrere aus den Drähten (16, 16a) oder Fasern bestehende Litzen (12) aufweist, weiter umfassend die Schritte:
- Bereitstellen von Sollwerten der bildlichen Längserstreckung der Darstellung von Litzen (12, 12a) relativ zu der bildlichen Längserstreckung des Seils (10) in dem Bilddatensatz ;
- Bestimmen der bildlichen Längserstreckung der Litzen (12, 12a) in dem Bilddatensatz, wobei das Bestimmen ein Anpassen einer angenommenen Längserstreckung an den Bilddatensatz umfaßt;
- Bestimmen zumindest eines Schlaggütewertes (Gₛ) mittels einer Schlaggütenorm als Funktion der bestimmten bildlichen Längserstreckung der Litzen (16, 16a) und der Sollwerte der bildlichen Längserstreckung der Litzen (16, 16a).

3. Verfahren nach Anspruch 2, wobei das Bereitstellen von Sollwerten der bildlichen Längserstreckung (J₀) der Darstellung von Drähten (16, 16a) oder Fasern relativ zu der bildlichen Längserstreckung der Litzen (12, 12a) in dem Bilddatensatz erfolgt und wobei das Bestimmen der bildlichen Längserstreckung (Jₘ) der Drähte (12, 12a) oder Fasern in dem Bilddatensatz relativ zu der bestimmten Längserstreckung der Litzen (12, 12a) erfolgt.

4. Verfahren nach einem der vorigen Ansprüche, wobei der zumindest eine bestimmte Gütewert einen Geometriegütewert (G_{G}) umfaßt, welcher mittels einer Geometriegütenorm
- als Funktion eines geometrischen Abstands zwischen der bestimmten bildlichen Längserstreckung (Jₘ) der Drähte (16, 16a) oder Fasern und der Sollwerte der bildlichen Längserstreckung (J₀) der Drähte (16, 16a) oder Fasern oder
- als Funktion eines geometrischen Abstandes zwischen den bestimmten bildlichen Längserstreckungen zumindest zweier benachbarter Drähte (16, 16a) oder Fasern bestimmt wird.

5. Verfahren nach einem der vorigen Ansprüche, weiter umfassend den Schritt:
- Bestimmen einer Helligkeitsverteilungsfunktion (52) entlang der bestimmten bildlichen Längserstreckung der Drähte (16, 16a) oder Fasern, wobei der zumindest eine bestimmte Gütewert einen Stetigkeitsgütewert (G_{S}) umfaßt, welcher mittels einer Stetigkeitsgütenorm als Funktion der Helligkeitsverteilungsfunktion, der ersten Ableitung der Helligkeitsverteilungsfunktion und/oder der zweiten Ableitung der Helligkeitsverteilungsfunktion und/oder deren Momente n-ter Ordnung mit n=0, 1, 2 bestimmt wird.

6. Verfahren nach einem der vorigen Ansprüche, weiter umfassend die Schritte:
- Bestimmen des lokalen bildlichen Durchmessers (Dₘ) des Seils (10) in dem Bilddatensatz ;
- Bereitstellen von Sollwerten des lokalen Durchmessers (D);
- Bestimmen eines Durchmessergütewertes (G_{D}) mittels einer Durchmessergütenorm als Funktion des bestimmten bildlichen Durchmessers (Dₘ) und der Sollwerte des lokalen Durchmessers (D).

7. Verfahren nach einem der vorigen Ansprüche, zum Prüfen eines Seils, das mehrere aus den Drähten (16, 16a) oder Fasern bestehende Litzen (12) aufweist, wobei der Schritt des Bereitstellens von Sollwerten der räumlichen Erstreckung der Litzen (12, 12a) und/oder der räumlichen Erstreckung der Drähte (16, 16a) oder Fasern folgende Schritte umfaßt:
- Auswählen eines Bilddatensatzes
- Bestimmen von zumindest zwei Stützpunkten und einer durch die Stützpunkte definierte Verbindungslinie derart, daß die Verbindungslinie im wesentlichen zusammenfällt mit
- einer Grenzlinie zwischen zwei benachbarten Litzen (12, 12a) oder
- einer Grenzlinie zwischen zwei benachbarten Drähten (16, 16a) oder Fasern oder
- einer Mittellinie einer Litze (12, 12a) oder
- einer Mittellinie eines der Drähte (16, 16a) oder Fasern;
- Abspeichern der Stützpunkte auf einem Speichermedium.

8. Verfahren nach einem der vorigen Ansprüche, zum Prüfen eines Seils, das mehrere aus den Drähten (16, 16a) oder Fasern bestehende Litzen (12) aufweist, wobei der Schritt des Bestimmens der räumlichen Erstreckung der Litzen (12, 12a) in dem erfaßten Abschnitt (30) des Seils (10) durch Anpassen einer angenommenen Längserstreckung (Kₘ) der Litzen an Bereiche des Bilddatensatzes mit geringen Helligkeitswerten erfolgt.

9. Verfahren nach einem der vorigen Ansprüche, wobei der Schritt des Bestimmens der räumlichen Erstreckung der Drähte (16, 16a) oder Fasern in dem erfaßten Abschnitt (30) des Seils (10) durch Anpassen einer angenommenen Längserstreckung (Jₘ) der Drähte oder Fasern an Bereiche des Bilddatensatzes mit hohen Helligkeitswerten erfolgt.

10. Verfahren nach einem der vorigen Ansprüche, weiter umfassend den Schritt der Zuordnung des Gütewerts zu den zugehörigen diskriminierten räumlichen Positionen entlang des Seils (10).

11. Computerprogrammprodukt, welches computerlesbare Instruktionen umfaßt, **dadurch gekennzeichnet, daß** die Instruktionen ein Verfahren gemäß einem der vorangehenden Ansprüche durchführen, wenn sie auf einem geeigneten Computersystem geladen und ausgeführt werden.

12. System zum optischen Prüfen eines Seils (10), welches mehrere aus Drähten (16) oder Fasern bestehende Litzen (12) aufweist, umfassend:
- zumindest eine Bilddatenerfassungseinrichtung (24), welche ausgelegt ist zumindest einen Abschnitt (30) des Seils (10) optisch zu erfassen;
- künstliche Lichtquellen zum Ausleuchten des Seils (10);
- eine Ausgabeeinheit;
**gekennzeichnet durch**
- eine Sollwertspeichereinheit, welche Mittel zum Bereitstellen von Sollwerten der Längserstreckung (K₀) der Litzen (12, 12a) und/oder der Längserstreckung (J₀) der Drähte (16, 16a) oder Fasern, insbesondere relativ zu der Längserstreckung (K₀) der Litzen (12, 12a), einer Diskriminierungseinheit aufweist;
- eine Bilddatenauswerteeinheit, welche Mittel zum Bestimmen einer Längserstreckung (Kₘ) der Litzen (12, 12a) in dem erfaßten Abschnitt (30) des Seils (10) und/oder der Längserstreckung (Jₘ) der Drähte (16, 16a) oder Fasern in dem erfaßten Abschnitt (30) des Seils (10), insbesondere relativ zu der bestimmten Längserstreckung (kₘ) der Litzen (12, 12a) aufweist; und
- eine Diskriminierungseinheit, weiter aufweisend:
-- Mittel zum Bestimmen zumindest eines Gütewert (G) mittels einer Gütenorm als Funktion der bestimmten Längserstreckung (Jₘ) der Drähte (16, 16a) oder Fasern und der Sollwerte der Längserstreckung (J₀) der Drähte (16, 16a) oder Fasern und/oder zumindest eines Gütewert mittels einer Gütenorm als Funktion der bestimmten Längserstreckung (Kₘ) der Litzen (12, 12a) und der Sollwerte der Längserstreckung (K₀) der Litzen (12, 12a) aufweist;
-- Mittel zum Diskriminieren der bildlichen Positionen innerhalb des Bilddatensatzes des Seils (10), an denen zumindest ein Gütewert (G) einen vorbestimmten zugeordneten Gütegrenzwert überschreitet oder unterschreitet.

13. System nach Anspruch 12, wobei die Diskriminierungseinheit Mittel zum Zuordnen des Gütewerts zu den zugehörigen diskriminierten räumlichen Positionen entlang des Seils (10) aufweist.

14. System nach Anspruch 12 oder 13, weiter umfassend:
- eine Seilbewertungseinheit zum Zuordnen der durch die Diskriminierungseinheit diskriminierten bildlichen oder räumlichen Positionen entlang des Seils (10) zu einem Bewertungsmerkmal.

## Claims

1. A method for computer-aided, optical testing of a rope (10) which comprises a plurality of wires (16, 16a) or fibres, comprising:
- providing an image data set of at least one portion (30) of the rope (10); **characterised by**
- providing target values of the pictorial longitudinal extension of the representation of wires (16, 16a) or fibres relative to the pictorial longitudinal extension of the rope (10) in the image data set;
- determining the pictorial longitudinal extension of the wires (16, 16a) or fibres in the image data set, the determining comprising adapting an estimated longitudinal extension to the image data set;
- determining at least one quality value by means of a quality norm as a function of the determined pictorial longitudinal extension of the wires (16, 16a) or fibres and the target values of the pictorial longitudinal extension of the wires (16, 16a) or fibres;
- discriminating pictorial positions within the image data set of the rope (10), at which at least one quality value exceeds or falls below a predetermined assigned quality threshold value;
- providing the discriminated pictorial positions.

2. The method according to claim 1, for testing a rope which comprises a plurality of strands (12) consisting of the wires (16, 16a) or fibres, further comprising the steps:
- providing target values of the pictorial longitudinal extension of the representation of strands (12, 12a) relative to the pictorial longitudinal extension of the rope (10) in the image data set;
- determining the pictorial longitudinal extension of the strands (12, 12a) in the image data set, the determining comprising adapting an estimated longitudinal extension to the image data set;
- determining at least one lay quality value (Gₛ) by means of a lay quality norm as a function of the determined pictorial longitudinal extension of the strands (16, 16a) and the target values of the pictorial longitudinal extension of the strands (16, 16a).

3. The method according to claim 2, the provision of target values of the pictorial longitudinal extension (J₀) of the representation of wires (16, 16a) or fibres taking place relative to the pictorial longitudinal extension of the strands (12, 12a) in the image data set and the determination of the pictorial longitudinal extension (Jₘ) of the wires (12, 12a) or fibres in the image data set taking place relative to the determined longitudinal extension of the strands (12, 12a).

4. The method according to one of the preceding claims, the at least one determined quality value comprising a geometry quality value (G_{G}) which is determined by means of a geometry quality norm
- as a function of a geometric distance between the determined pictorial longitudinal extension (Jₘ) of the wires (16, 16a) or fibres and the target values of the pictorial longitudinal extension (J₀) of the wires (16, 16a) or fibres or
- as a function of a geometric distance between the determined pictorial longitudinal extensions of at least two adjacent wires (16, 16a) or fibres.

5. The method according to one of the preceding claims, further comprising the step:
- determining a brightness distribution function (52) along the determined pictorial longitudinal extension of the wires (16, 16a) or fibres, the at least one determined quality value comprising a continuity quality value (Gₛ) which is determined by means of a continuity quality norm as a function of the brightness distribution function, the first derivative of the brightness distribution function and/or the second derivative of the brightness distribution function and/or their nth-order moments with n = 0, 1, 2.

6. The method according to one of the preceding claims, further comprising the steps:
- determining the local pictorial diameter (Dₘ) of the rope (10) in the image data set;
- providing target values of the local diameter (D);
- determining a diameter quality value (G_{D}) by means of a diameter quality norm as a function of the determined pictorial diameter (Dₘ) and the target values of the local diameter (D).

7. The method according to one of the preceding claims, for testing a rope which comprises a plurality of strands (12) consisting of the wires (16, 16a) or fibres, the step of providing target values of the spatial extension of the strands (12, 12a) and/or the spatial extension of the wires (16, 16a) or fibres comprising the following steps:
- selecting an image data set
- determining at least two support points and a connection line defined by the support points such that the connection line substantially coincides with
- a border line between two adjacent strands (12, 12a) or
- a border line between two adjacent wires (16, 16a) or fibres or
- a centre line of a strand (12, 12a) or
- a centre line of one of the wires (16, 16a) or fibres;
- storing the support points on a storage medium.

8. The method according to one of the preceding claims, for testing a rope which comprises a plurality of strands (12) consisting of the wires (16, 16a) or fibres, the step of determining the spatial extension of the strands (12, 12a) in the captured portion (30) of the rope (10) taking place by adapting an estimated longitudinal extension (Kₘ) of the strands to regions of the image data set with low brightness values.

9. The method according to one of the preceding claims, the step of determining the spatial extension of the wires (16, 16a) or fibres in the captured portion (30) of the rope (10) taking place by adapting an estimated longitudinal extension (Jₘ) of the wires or fibres to regions of the image data set with high brightness values.

10. The method according to one of the preceding claims, further comprising the step of assigning the quality value to the associated, discriminated spatial positions along the rope (10).

11. A computer program product which comprises computer-readable instructions, **characterised in that** the instructions perform a method according to one of the preceding claims, when loaded and executed on a suitable computer system.

12. A system for the optical testing of a rope (10) which comprises a plurality of strands (12) consisting of wires (16) or fibres, comprising
- at least one image data capturing device (24) which is designed to capture optically at least one portion (30) of the rope (10);
- artificial light sources for illuminating the rope (10);
- an output unit;
**characterised by**
- a target value storage unit, which comprises means for providing target values of the longitudinal extension (K₀) of the strands (12, 12a) and/or the longitudinal extension (J₀) of the wires (16, 16a) or fibres, in particular relative to the longitudinal extension (K₀) of the strands (12, 12a), to a discriminating unit;
- an image data evaluating unit which comprises means for determining a longitudinal extension (Kₘ) of the strands (12, 12a) in the captured portion (30) of the rope (10) and/or the longitudinal extension (Jₘ) of the wires (16, 16a) or fibres in the captured portion (30) of the rope (10), in particular relative to the determined longitudinal extension (Kₘ) of the strands (12, 12a); and
- a discriminating unit further comprising:
- means for determining at least one quality value (G) by means of a quality norm as a function of the determined longitudinal extension (Jₘ) of the wires (16, 16a) or fibres and the target values of the longitudinal extension (J₀) of the wires (16, 16a) or fibres and/or at least one quality value by means of a quality norm as a function of the determined longitudinal extension (Kₘ) of the strands (12, 12a) and the target values of the longitudinal extension (K₀) of the strands (12, 12a);
- means for discriminating the pictorial positions within the image data set of the rope (10) in which at least one quality value (G) exceeds or falls below a predetermined assigned quality threshold value.

13. The system according to claim 12, the discriminating unit comprising means for assigning the quality value to the associated, discriminated spatial positions along the rope (10).

14. The system according to claim 12 or 13 further comprising:
- a rope assessment unit for assigning an assessment feature to the pictorial or spatial positions along the rope (10) discriminated by the discriminating unit.

## Revendications

1. Procédé de contrôle optique, assisté par ordinateur, d'un câble (10) qui présente plusieurs brins métalliques (16, 16a) ou fibres, comprenant :
- la fourniture d'un jeu de données images portant sur au moins un tronçon (30) du câble (10) ;
**caractérisé par**
- la fourniture de valeurs de consigne de l'étendue longitudinale imagée de la représentation de brins métalliques (16, 16a) ou fibres par rapport à l'étendue longitudinale imagée du câble (10) dans le jeu de données images ;
- la définition de l'étendue longitudinale imagée des brins métalliques (16, 16a) ou fibres dans le jeu de données images, la définition comprenant une adaptation d'une étendue longitudinale supposée au jeu de données images ;
- la définition d'au moins une valeur de qualité au moyen d'une norme de qualité en fonction de l'étendue longitudinale imagée définie des brins métalliques (16, 16a) ou fibres et des valeurs de consigne de l'étendue longitudinale imagée des brins métalliques (16, 16a) ou fibres ;
- la discrimination de positions imagées à l'intérieur du jeu de données images du câble (10), dans lesquelles au moins une valeur de qualité passe au-dessus ou au-dessous d'une valeur limite de qualité affectée prédéfinie ;
- la fourniture des positions imagées discriminées.

2. Procédé selon la revendication 1, pour le contrôle d'un câble qui présente plusieurs torons (12) composés des brins métalliques (16, 16a) ou fibres, comprenant également les étapes suivantes :
- la fourniture de valeurs de consigne de l'étendue longitudinale imagée de la représentation de torons (12, 12a) par rapport à l'étendue longitudinale imagée du câble (10) dans le jeu de données images ;
- la définition de l'étendue longitudinale imagée des torons (12, 12a) dans le jeu de données images, la définition comprenant une adaptation d'une étendue longitudinale supposée au jeu de données images ;
- la définition d'au moins une valeur de qualité de commettage (Gₛ) au moyen d'une norme de qualité de commettage en fonction de l'étendue longitudinale imagée définie des torons (16, 16a) et des valeurs de consigne de l'étendue longitudinale imagée des brins métalliques (16, 16a).

3. Procédé selon la revendication 2, la fourniture de valeurs de consigne de l'étendue longitudinale imagée (J₀) de la représentation de brins métalliques (16, 16a) ou fibres par rapport à l'étendue longitudinale imagée des torons (12, 12a) s'effectuant dans le jeu de données images, et la définition de l'étendue longitudinale imagée (Jₘ) des brins métalliques (12, 12a) ou fibres s'effectuant dans le jeu de données images par rapport à l'étendue longitudinale définie des torons (12, 12a).

4. Procédé selon une des revendications précédentes, la valeur de qualité définie au moins au nombre de un comprenant une valeur de qualité de géométrie (G_{G}) qui est définie au moyen d'une norme de qualité de géométrie
- en fonction d'un intervalle géométrique entre l'étendue longitudinale imagée (Jₘ) définie des brins métalliques (16, 16a) ou fibres et des valeurs de consigne de l'étendue longitudinale imagée (J₀) des brins métalliques (16, 16a) ou fibres ou
- en fonction d'un intervalle géométrique entre les étendues longitudinales imagées définies d'au moins deux brins métalliques (16, 16a) voisins ou fibres.

5. Procédé selon une des revendications précédentes, comprenant également l'étape suivante :
- la définition d'une fonction de répartition de luminosité (52) le long de l'étendue longitudinale imagée définie des brins métalliques (16, 16a) ou fibres, la valeur de qualité définie au moins au nombre de un comprenant une valeur de qualité de constance (Gₛ) qui est définie au moyen d'une norme de qualité de constance en fonction de la fonction de répartition de luminosité, de la première dérivée de la fonction de répartition de luminosité et/ou de la deuxième dérivée de la fonction de répartition de luminosité et/ou de ses moments d'ordre n avec n = 0, 1, 2.

6. Procédé selon une des revendications précédentes, comprenant également les étapes suivantes :
- la définition du diamètre imagé (Dₘ) local du câble (10) dans le jeu de données images ;
- la fourniture de valeurs de consigne du diamètre local (D) ;
- la définition d'une valeur de qualité de diamètre (G_{D}) au moyen d'une norme de qualité de diamètre en fonction du diamètre imagé (Dₘ) défini et des valeurs de consigne du diamètre local (D).

7. Procédé selon une des revendications précédentes, pour le contrôle d'un câble qui présente plusieurs torons (12) composés des brins métalliques (16, 16a) ou fibres, l'étape de fourniture de valeurs de consigne de l'étendue spatiale des torons (12, 12a) et/ou de l'étendue spatiale des brins métalliques (16, 16a) ou fibres comprenant les étapes suivantes :
- la sélection d'un jeu de données images
- la définition d'au moins deux points d'appui et d'une ligne de raccordement définie par les points d'appui de telle sorte que la ligne de raccordement coïncide essentiellement avec
- une ligne limite entre deux torons (12, 12a) voisins ou
- une ligne limite entre deux brins métalliques (16, 16a) voisins ou fibres ou
- une ligne centrale d'un toron (12, 12a) ou
- une ligne centrale d'un des brins métalliques (16, 16a) ou fibres ;
- l'enregistrement des points d'appui sur un support de mémoire.

8. Procédé selon une des revendications précédentes, pour le contrôle d'un câble qui présente plusieurs torons (12) composés des brins métalliques (16, 16a) ou fibres, l'étape de définition de l'étendue spatiale des torons (12, 12a) s'effectuant dans le tronçon (30) détecté du câble (10) par l'adaptation d'une étendue longitudinale supposée (Kₘ) des torons à des zones du jeu de données images ayant de faibles valeurs de luminosité.

9. Procédé selon une des revendications précédentes, l'étape de définition de l'étendue spatiale des brins métalliques (16, 16a) ou fibres s'effectuant dans le tronçon (30) détecté du câble (10) par l'adaptation d'une étendue longitudinale supposée (Jₘ) des brins métalliques ou fibres à des zones du jeu de données images ayant de fortes valeurs de luminosité.

10. Procédé selon une des revendications précédentes, comprenant également l'étape d'affectation de la valeur de qualité aux positions spatiales discriminées correspondantes le long du câble (10).

11. Produit de programme informatique qui comprend des instructions lisibles par ordinateur, **caractérisé en ce que** les instructions exécutent un procédé selon une des revendications précédentes si elles sont chargées et exécutées sur un système informatique approprié.

12. Système de contrôle optique d'un câble (10) qui présente plusieurs torons (12) composés de brins métalliques (16) ou fibres, comprenant :
- au moins un dispositif de détection de données images (24) qui est conçu pour détecter optiquement au moins un tronçon (30) du câble (10) ;
- des sources lumineuses artificielles destinées à éclairer le câble (10) ;
- une unité de sortie ;
**caractérisé par**
- une unité d'enregistrement de valeurs de consigne qui présente des moyens pour fournir des valeurs de consigne de l'étendue longitudinale (K₀) des torons (12, 12a) et/ou de l'étendue longitudinale (J₀) des brins métalliques (16, 16a) ou fibres, en particulier par rapport à l'étendue longitudinale (K₀) des torons (12, 12a), d'une unité de discrimination ;
- une unité d'analyse de données images qui présente des moyens pour déterminer une étendue longitudinale (Kₘ) des torons (12, 12a) dans le tronçon (30) détecté du câble (10) et/ou l'étendue longitudinale (Jₘ) des brins métalliques (16, 16a) ou fibres dans le tronçon (30) détecté du câble (10), en particulier par rapport à l'étendue longitudinale (Kₘ) définie des torons (12, 12a) ; et
- une unité de discrimination, présentant également :
-- des moyens de détermination d'au moins une valeur de qualité (G) au moyen d'une norme de qualité en fonction de l'étendue longitudinale (Jₘ) définie des brins métalliques (16, 16a) ou fibres et des valeurs de consigne de l'étendue longitudinale (J₀) des brins métalliques (16, 16a) ou fibres et/ou d'au moins une valeur de qualité au moyen d'une norme de qualité en fonction de l'étendue longitudinale (Kₘ) définie des torons (12, 12a) et des valeurs de consigne de l'étendue longitudinale (K₀) des torons (12, 12a) ;
-- des moyens pour la discrimination des positions imagées à l'intérieur du jeu de données du câble (10) dans lesquelles au moins une valeur de qualité (G) passe au-dessus ou au-dessous d'une valeur limite de qualité affectée prédéfinie.

13. Système selon la revendication 12, l'unité de discrimination présentant des moyens pour l'affectation de la valeur de qualité aux positions spatiales discriminées correspondantes le long du câble (10).

14. Système selon la revendication 12 ou 13, comprenant également :
- une unité d'évaluation du câble pour l'affectation, à une caractéristique d'évaluation, des positions imagées ou spatiales discriminées par l'unité de discrimination le long du câble (10).
